(19) Europäisches Patentamt
European Patent Office
Office européen des brevets

(11) EP 2 690 148 A1

(12) EUROPEAN PATENT APPLICATION

(43) Date of publication:
**29.01.2014 Bulletin 2014/05**

(51) Int Cl.:
*C09J 7/02* (2006.01)

(21) Application number: **13177790.6**

(22) Date of filing: **24.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2012 JP 2012167431**

(71) Applicant: **NITTO DENKO CORPORATION**
**Ibaraki-shi, Osaka 567-8680 (JP)**

(72) Inventors:
- **Morimoto, Yu**
  **Ibaraki-shi, Osaka 567-8680 (JP)**
- **Yonezaki, Kousuke**
  **Ibaraki-shi, Osaka 567-8680 (JP)**
- **Amano, Tatsumi**
  **Ibaraki-shi, Osaka 567-8680 (JP)**
- **Mitsui, Kazuma**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

# (54) Pressure-sensitive adhesive sheet

(57) An aim of the present invention is to provide a pressure-sensitive adhesive sheet excellent in antistatic property, re-peelable property, and adherability (tackiness). A pressure-sensitive adhesive sheet according to the present invention includes a substrate and a pressure-sensitive adhesive layer on at least one surface of the substrate, wherein the pressure-sensitive adhesive layer is formedof a water dispersion type acryl-based pressure-sensitive adhesive composition containing an acrylic emulsion-based polymer containing at least 70 to 99.5% by weight of a (meth)acrylic acid alkyl ester (A) and 0.5 to 10% by weight of a carboxyl-containing unsaturated monomer (B) as raw material monomers and an ionic compound; a peeling power ratio ((B)/(A)) of a peeling power (B) for an adherend surface with a surface roughness Ra of 250 to 450 μm and low polarity to a peeling power (A) for an adherend surface with a surface roughness Ra of 5 to 50 μm and high polarity measured at a peeling speed of 30 m/minute and a peeling angle of 180° is 0.7 to 1. 5; the adhesion to the low polarity adherend surface is 99.0% or higher; and an initial peeling electrification voltage (absolute value) is 1.0 kV or lower.

Fig.1

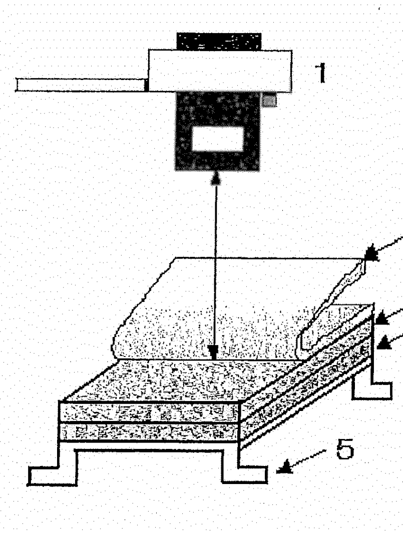


EP 2 690 148 A1

## Description

BACKGROUND OF THE INVENTION

Field of the Invention

The present invention relates to a pressure-sensitive adhesive sheet excellent in antistatic property, re-peelable property, adherability (tackiness), and adhesion.

Description of the Related Art

In the production and processing processes of an optical member (optical material) represented by an optical film to be used for a polarizing plate, a retardation plate, a reflection prevention plate, etc., for the purpose of preventing scratching and staining on the surface, improving the cuttingprocessibility, suppressing cracks, and the like, a surface protecting film is used while being stuck to the surface of the optical member (see Patent Documents 1 and 2). As the surface protecting film, a re-peelable pressure-sensitive adhesive sheet obtained by forming a re-peelable pressure-sensitive adhesive layer on the surface of a plastic film substrate has been usually used.

Previously, solvent type acryl-based pressure-sensitive adhesives have been used as a pressure-sensitive adhesive for surface protecting films (see Patent Documents 1 and 2); however since these solvent type acryl-based pressure-sensitive adhesives contain an organic solvent, it has been tried to replace these solvent type acryl-based pressure-sensitive adhesives with water dispersion type acryl-based pressure-sensitive adhesives from the viewpoint of working environments at the time of application (see Patent Documents 3 to 5).

These surface protecting films are required to have sufficient adherability during the time the surface protecting films are stuck to optical members. Further, these surface protecting films are required to have excellent peelable (re-peelable) properties since the surface protecting films are peeled off after used in the production process for optical members.

In general, surface protecting films or optical members are made of a plastic material, and thus have high electrical insulating properties and generate static electricity at the time of friction or peeling off. Accordingly, when a surface protecting film is peeled off from an optical member such as a polarizing plate, static electricity is generated and when a voltage is applied to a liquid crystal in the state where the static electricity generated at that time remains as it is, it leads to problems such that orientation of liquid crystal molecules is lost or a defect occurs in a panel.

Further, existence of static electricity may possibly cause other problems of attraction of dust and waste or deterioration of workability. Accordingly, in order to solve the above-mentioned problems, surface protecting films are subjected to various kinds of antistatic treatments.

PRIOR ART DOCUMENTS

PATENT DOCUMENTS

Patent Document 1: JP-A H11-000961
Patent Document 2: JP-A 2001-064607
Patent Document 3: JP-A 2001-131512
Patent Document 4: JP-A 2003-027026
Patent Document 5: JP 3810490

SUMMARY OF THE INVENTION

PROBLEMS TO BE SOLVED BY THE INVENTION

However, as described above, the foregoing problems have not been solved yet in good balance, and in a technical field relevant to electronic appliances where electrification becomes a particularly serious problem, it is difficult to satisfy further demands for improvement of a pressure-sensitive adhesive sheet having an antistatic property and usable for surface protection, and presently, a pressure-sensitive adhesive sheet having an antistatic property, a re-peelable property, and adherability (tackiness) has not been obtained.

Accordingly, an aim of the present invention is to provide a pressure-sensitive adhesive sheet excellent in antistatic property, re-peelable property, adherability (tackiness), and adhesion.

The inventors of the present invention have made various investigation to achieve the above-mentioned aim and found it possible to obtain a pressure-sensiti ve adhesive sheet excellent in antistatic property and pressure-sensitive adhesive properties (re-peelable property, adherability (tackiness), and adhesion) which contains, as constituent components, an acrylic emulsion-based polymer produced from raw material monomers with specified compositions, and an ionic compound as an antistatic agent by adjusting a peeling power ratio of a peeling power for an adherend surface (rough adherend surface) with a surface roughness Ra of 250 to 450 $\mu$m and low polarity to a peeling power for an adherend surface (smooth adherend surface) with a surface roughness Ra of 5 to 50 $\mu$m and high polarity measured in specified peeling conditions, and adhesion to the lowpolarity adherend surface (rough adherend surface) as well as initial peeling electrification voltage to specified ranges, and thus have completed the present invention.

That is, a pressure-sensitive adhesive sheet according to the present invention includes a substrate and a pressure-sensitive adhesive layer on at least one surface of the substrate, wherein the pressure-sensitive adhesive layer is formed of a water dispersion type acryl-based pressure-sensitive adhesive composition containing an acrylic emulsion-based polymer containing at least 70 to 99.5% by weight of a (meth) acrylic acid alkyl ester (A) and 0.5 to 10% by weight of a carboxyl-containing unsaturated monomer (B) as raw material monomers and an ionic compound; a peeling power ratio ((B) / (A)) of a peeling power (B) for an adherend surface with a surface roughness Ra of 250 to 450 $\mu$m and low polarity to a peeling power (A) for an adherend surface with a surface roughness Ra of 5 to 50 $\mu$m and high polarity measured at a peeling speed of 30 m/minute and a peeling angle of 180° is 0.7 to 1.5; the adhesion to the low polarity adherend surface is 99.0% or higher; and an initial peeling electrification voltage (absolute value) is 1.0 kV or lower.

It is preferable that in the pressure-sensitive adhesive sheet of the present invention, the water dispersion type acryl-based pressure-sensitive adhesive composition contains an ether-containing polysiloxane.

It is preferable that in the pressure-sensitive adhesive sheet of the present invention, the water dispersion type acryl-based pressure-sensitive adhesive composition contains a water-insoluble crosslinking agent having two or more functional groups which can be reacted with a carboxyl group.

It is preferable that in the pressure-sensitive adhesive sheet of the present invention, the ionic compound is an ionic liquid and/or an alkali metal salt.

It is preferable that in the pressure-sensitive adhesive sheet of the present invention, the ionic liquid contains at least one kind cation selected from the group consisting of cations represented by the following formulas (A) to (E):

[Formula 1]

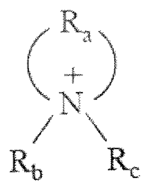
(A)

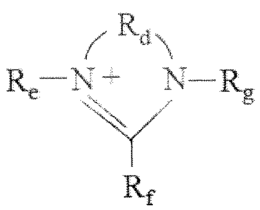
(B)

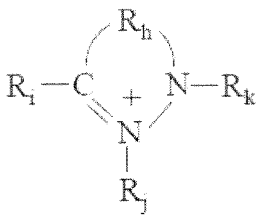
(C)

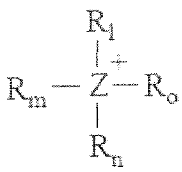
(D)

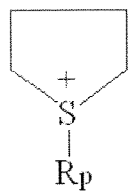
(E)

[in the formula (A), $R_a$ represents a hydrocarbon group with 4 to 20 carbon atoms or is optionally a functional group formed by partially substituting the hydrocarbon group with a heteroatom; and $R_b$ and $R_c$ are the same or different, and each represent hydrogen or a hydrocarbon group with 1 to 16 carbon atoms or are each optionally a functional group formed by partially substituting the hydrocarbon group with a heteroatom; provided that the nitrogen atom contains a double bond, there is no $R_c$];

[in the formula (B), $R_d$ represents a hydrocarbon group with 2 to 20 carbon atoms or is optionally a functional group formed by partially substituting the hydrocarbon group with a heteroatom; and $R_e$, $R_f$, and $R_g$ are the same or different, and each represent hydrogen or a hydrocarbon group with 1 to 16 carbon atoms or are each optionally a functional group formed by partially substituting the hydrocarbon group with a heteroatom] ;

[in the formula (C), $R_h$ represents a hydrocarbon group with 2 to 20 carbon atoms or is optionally a functional group formed by partially substituting the hydrocarbon group with a heteroatom; and $R_i$, $R_j$, and $R_k$ are the same or different, and each represent hydrogen or a hydrocarbon group with 1 to 16 carbon atoms or are each optionally a functional group formed by partially substituting the hydrocarbon group with a heteroatom];

[in the formula (D), Z represents a nitrogen, sulfur or phosphorus atom; $R_l$, $R_m$, $R_n$, and $R_o$ are the same or different, and each represent a hydrocarbon group with 1 to 20 carbon atoms or are each optionally a functional group formed by partially substituting the hydrocarbon group with a heteroatom; provided that Z is a sulfur atom, there is no $R_o$]; and

[in the formula (E), Rp represents a hydrocarbon group with 1 to 18 carbon atoms or is optionally a functional group

formed by partially substituting the hydrocarbon group with a heteroatom].

It is preferable that in the pressure-sensitive adhesive sheet of the present invention, the cation of the ionic liquid is at least one kind cation selected from the group consisting of cations of imidazolium-containing salt type, pyridinium-containing salt type, morpholinium-containing salt type, pyrrolidinium-containing salt type, piperidinium-containing salt type, ammonium-containing salt type, phosphonium-containing salt type, and sulfonium-containing salt type.

It is preferable that in the pressure-sensitive adhesive sheet of the present invention, the ionic liquid contains at least one kind cation selected from the group consisting of cations represented by the following formulas (a) to (d):

[Formula 2]

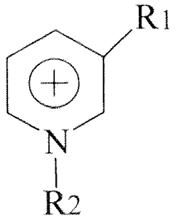

(a)

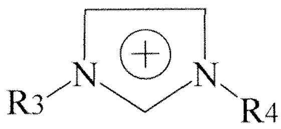

(b)

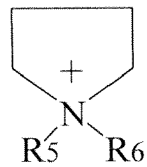

(c)

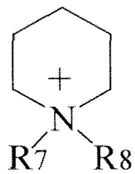

(d)

[in the formula (a), $R_1$ represents hydrogen or a hydrocarbon group with 1 to 3 carbon atoms; and $R_2$ represents hydrogen or a hydrocarbon group with 1 to 7 carbon atoms];
[in the formula (b), $R_3$ represents hydrogenor a hydrocarbon group with 1 to 3 carbon atoms; and $R_4$ represents hydrogen or a hydrocarbon group with 1 to 7 carbon atoms];
[in the formula (c), $R_5$ represents hydrogen or a hydrocarbon group with 1 to 3 carbon atoms; and $R_6$ represents hydrogen or a hydrocarbon group with 1 to 7 carbon atoms]; and
[in the formula (d), $R_7$ represents hydrogen or a hydrocarbon group with 1 to 3 carbon atoms; and $R_8$ represents hydrogen or a hydrocarbon group with 1 to 7 carbon atoms].

It is preferable that in the pressure-sensitive adhesive sheet of the present invention, the water dispersion type acryl-based pressure-sensitive adhesive composition contains 0.5 to 3 parts by weight of the ionic liquid per 100 parts by weight of the acrylic emulsion-based polymer (solid matter).

It is preferable that in the pressure-sensitive adhesive sheet of the present invention, the water dispersion type acryl-based pressure-sensitive adhesive composition contains 0.1 to 3 parts by weight of the ether-containing polysiloxane per 100 parts by weight of the acrylic emulsion-based polymer (solid matter).

It is preferable that in the pressure-sensitive adhesive sheet of the present invention, the acrylic emulsion-based polymer is a polymer obtained by polymerization using a reactive emulsifier containing a radically polymerizable functional group in the molecule.

It is preferable that in the pressure-sensitive adhesive sheet of the present invention, the water dispersion type acryl-based pressure-sensitive adhesive composition contains 1.1 to 2.4 parts by weight of the water-insoluble crosslinking agent per 100 parts by weight of the acrylic emulsion-based polymer (solid matter).

It is preferable that in the pressure-sensitive adhesive sheet of the present invention, the acrylic emulsion-based polymer is a polymer obtained by polymerization using 0.01 to 1 part by weight of a polymerization initiator per 100 parts by weight in total of the raw material monomers.

It is preferable that in the pressure-sensitive adhesive sheet of the present invention, the acrylic emulsion-based polymer is a polymer obtained by polymerization using a chain transfer agent.

It is preferable that the pressure-sensitive adhesive sheet of the present invention has a substrate and an antistatic layer and/or a stain-resistant layer on at least one surface side of the substrate.

It is preferable that the pressure-sensitive adhesive sheet of the present invention is a surface protecting film for an optical member.

EFFECT OF THE INVENTION

The pressure-sensitive adhesive sheet of the present invention has a pressure-sensitive adhesive layer formed of a water dispersion type acryl-based pressure-sensitive adhesive composition containing, as constituent components, a specified acrylic emulsion-based polymer produced from raw material monomers in the specified composition and an ionic compound as an antistatic agent, and is provided with excellent antistatic property and pressure-sensitive adhesive properties (re-peelable property, adherability (tackiness)) and thus useful.

BRIEF DESCRIPTION OF THE DRAWINGS

Fig. 1 is a schematic view of a potential measurement part.

DETAILED DESCRIPTION OF THE PREFERRED EMBODIMENTS

A pressure-sensitive adhesive sheet according to the present invention includes a substrate and a pressure-sensitive adhesive layer on at least one surface of the substrate, wherein the pressure-sensitive adhesive layer is formed of a water dispersion type acryl-based pressure-sensitive adhesive composition containing an acrylic emulsion-based polymer containing at least 70 to 99.5% by weight of a (meth)acrylic acid alkyl ester (A) and 0.5 to 10% by weight of a carboxyl-containing unsaturated monomer (B) as raw material monomers and an ionic compound.

[Acrylic emulsion-based polymer]

The acrylic emulsion-based polymer is a polymer composed of at least 70 to 99.5% by weight of a (meth) acrylic acid alkyl ester (A) and 0.5 to 10% by weight of a carboxyl-containing unsaturated monomer (B) . The acrylic emulsion-based polymers may be used alone or in combination of two or more thereof. In the present invention, "(meth) acryl" refers to "acryl" and/or "methacryl".

The (meth) acrylic acid alkyl ester (A) is used as a main monomer component and plays a role as a pressure-sensitive adhesive (or pressure-sensitive adhesive layer) for exhibiting mainly basic characteristics such as tackiness and peeling properties. Particularly, an acrylic acid alkyl ester tends to give flexibility to a polymer which forms a pressure-sensitive adhesive layer and to exert an effect of allowing the pressure-sensitive adhesive layer to exhibit adhesion and adherability, and a methacrylic acid alkyl ester tends to give hardness to a polymer which forms a pressure-sensitive adhesive layer and to exert an effect of adjusting the re-peelable properties of the pressure-sensitive adhesive layer. Examples of the (meth)acrylic acid alkyl ester (A) include, but are not particularly limited to, (meth) acrylic acid alkyl esters having a straight chain, branched chain, or cyclic alkyl group with 2 to 14 (more preferably 2 to 10 and furthermore preferably 4 to 8) carbon atoms, and the like.

Among them, the acrylic acid alkyl ester is preferably, for example, an acrylic acid alkyl ester having an alkyl group with 2 to 14 (more preferably 4 to 9) carbon atoms, and examples thereof include acrylic acid alkyl esters having a straight chain or branched chain alkyl group such as n-butyl acrylate, isobutyl acrylate, sec-butyl acrylate, isoamyl acrylate, hexyl acrylate, heptyl acrylate, octyl acrylate, 2-ethylhexyl acrylate, isooctyl acrylate, nonyl acrylate, and isononyl acrylate; and the like. Particularly, 2-ethylhexyl acrylate is preferable.

The methacrylicacidalkyl ester is preferably, for example, a methacrylic acid alkyl ester having an alkyl group with 2 to 14 (more preferably 2 to 10) carbon atoms, and examples thereof include methacrylic acid alkyl esters having a straight chain or branched chain alkyl group such as ethyl methacrylate, propyl methacrylate, isopropyl methacrylate, n-butyl methacrylate, isobutyl methacrylate, sec-butyl methacrylate, and tert-butyl methacrylate; alicyclic methacrylic acid alkyl esters such as cyclohexyl methacrylate, bornyl methacrylate, and isobornyl methacrylate; and the like.

The (meth) acrylic acid alkyl esters (A) may be selected properly in accordance with adherability of interest and the like, and used alone or in combination of two or more thereof.

The content of the (meth) acrylic acid alkyl ester (A) is 70 to 99.5% by weight, preferably 85 to 98% by weight, and more preferably 87 to 95% by weight in total (100% by weight) of the raw material monomers (entire raw material monomers) constituting the acrylic emulsion-based polymer. If the content is 70% by weight or more, pressure-sensitive adhesive properties (adherability, re-peelable property and the like) of the pressure-sensitive adhesive layer are improved and therefore, it is preferable. On the other hand, if the content exceeds 99.5% by weight, the content of the carboxyl-containing unsaturated monomer (B) is decreased so that the appearance of the pressure-sensitive adhesive layer formed of the pressure-sensitive adhesive composition may be worsened. In the case where two or more kind of the (meth) acrylic acid alkyl esters (A) are used, the sum (total) of all the (meth)acrylic acidalkyl esters (A) should be within the above-mentioned range.

The carboxyl-containing unsaturated monomer (B) exerts a function of forming a protecting layer on the surfaces of emulsion particles composed of the acrylic emulsion-based polymer to prevent shear fracture of the particles. The effect can be improved further by neutralizing the carboxyl group with abase. The stability against the shear fracture of the particles is more generally referred to as mechanical stability. Use of one or more kinds of the crosslinking agents (the water-insoluble crosslinking agents are preferable in the present invention) in combination, which react with a carboxyl group, can provide crosslinking points at the stage of forming a pressure-sensitive adhesive layer by water removal. Further, the adhesion (anchoring properties) to a substrate can be improved through the crosslinking agent (the water-insoluble crosslinking agent). Examples of the carboxyl-containing unsaturated monomer (B) include (meth)

acrylic acids (acrylic acid and methacrylic acid), itaconic acid, maleic acid, fumaric acid, crotonic acid, carboxyethyl acrylate, carboxypentyl acrylate, and the like. The carboxyl-containing unsaturated monomer (B) mayalsocontain acid anhydride-containing unsaturated monomers such as maleic anhydride and itaconic anhydride. Among them, acrylic acid is preferable since acrylic acid exists in a relatively high concentration on the surfaces of the particles and easily forms a protecting layer with a higher density.

The content of the carboxyl-containing unsaturated monomer (B) is 0.5 to 10% by weight, preferably 1 to 6% by weight, and more preferably 2 to 5% by weight in total (100% by weight) of the raw material monomers (entire raw material monomers) constituting the acrylic emulsion-based polymer. Adjustment of the content to 10% by weight or lower can suppress, after formation of the pressure-sensitive adhesive layer, an increase in interaction of the pressure-sensitive adhesive layer with a functional group existing on the surface of an adherend (an object to be protected) such as a polarizing plate to suppress an increase in peeling power (adhesive power) with the lapse of time, and thus to improve the peeling properties and therefore, it is preferable. If the content exceeds 10% by weight, since the carboxyl-containing unsaturated monomer (B) (e.g., acrylic acid) is generally water-soluble, it may possibly be polymerized in water to cause an increase in viscosity (viscosity increasing). Further, if a large number of carboxyl groups exist in the skeleton of the acrylic emulsion-based polymer, it is supposed that the pressure-sensitive adhesive layer interacts with, for example, ether groups of an ether-containing polysiloxane blended as an antistatic agent to hinder ion conductivity, and no antistatic performance to an adherend can be obtained and therefore, it is not preferable. On the other hand, adjustment of the content to 0.5% by weight or more improves the mechanical stability of the emulsion particles and therefore, it is preferable. The adhesion (anchoring properties) between the pressure-sensitive adhesive layer and the substrate can be improved to suppress the adhesive residue and therefore, it is preferable.

For the purpose of providing a specified function, the raw material monomers constituting the acrylic emulsion-based polymer may also include at least on kind monomer (C) selected from the group consisting of methyl methacrylate, vinyl acetate, and diethylacrylamide as a constituent component in addition to the above indispensable components [(meth) acrylic acid alkyl ester (A) and carboxyl-containingunsaturated monomer (B)]. In the case of using these monomers (at least one kind), the stability of the emulsion particles is increased, gelling matters (agglomerates) can be decreased, and further the appearance defects or the like can be lessened and thus it is effective. Further, in the case of using a water-insoluble crosslinking agent as a crosslinking agent, the affinity with a hydrophobic water-insoluble crosslinking agent is increased, dispersibility of the emulsion particles is improved, and dents in the pressure-sensitive adhesive layer due to defective dispersion can be decreased.

The content of the monomer (C) is preferably 0.5 to 10% by weight, more preferably 1 to 6% by weight, and particularly preferably 2 to 5% by weight in total (100% by weight) of the raw material monomers constituting the acrylic emulsion-based polymer. Adjustment of the content to 10% by weight or less makes it possible to suppress the appearance defect of the pressure-sensitive adhesive layer and therefore, it is preferable. If the content exceeds 10% by weight, agglomerates may be formed (produced). On the other hand, adjustment of the content to 0.5% by weight or more makes it possible to improve the mechanical stability of the emulsionparticles and therefore, it is preferable.

In addition to the monomers (A) to (C), for the purpose of improving crosslinking among the emulsion particles and cohesive strength, epoxy-containing monomers such as glycidyl (meth)acrylate and polyfunctional monomers such as trimethylolpropane tri(meth)acrylate and divinylbenzene are also usable as the other monomer components . It is preferable to blend (add) these monomers at a ratio of lower than 5% by weight, respectively. The blend amount (use amount) is a content in total (100% by weight) of the raw material monomers (entire raw material monomers) constituting the acrylic emulsion-based polymer of the present invention.

It is preferable that the blend amount (use amount) of a hydroxyl-containing unsaturated monomer, as the other monomer components, such as 2-hydroxyethyl acrylate or 2-hydroxypropyl acrylate is small from the viewpoint of a decrease in whitening staining. Specifically, the blend amount of the hydroxyl-containing unsaturated monomer (the content in total (100% by weight) of the raw material monomers (entire rawmaterial monomers) constituting the acrylic emulsion-based polymer) is preferably lower than 1% by weight, more preferably lower than 0.1% by weight, and furthermore preferably substantially null (e.g. , lower than 0.05% by weight) . However, in the case where crosslinking points for crosslinking of a hydroxyl group and an isocyanato group, metal crosslinking, and the like are intended to be introduced, the monomer may be added (used) in an amount of about 0.01 to 10% by weight.

The acrylic emulsion-based polymer can be obtained by the emulsion polymerization of the raw material monomers (monomer mixture) with an emulsifier and a polymerization initiator.

[Reactive emulsifier]

The emulsifier to be used for emulsion polymerization of the acrylic emulsion-based polymer of the present invention can be used and particularly, use of a reactive emulsifier having a radically polymerizable functional group (radically polymerizable functional group-containing reactive emulsifier) is a preferable aspect. The reactive emulsifiers may be used alone or in combination of two or more thereof.

The reactive emulsifier having a radical polymerizable functional group (hereinafter, referred to as "reactive emulsifier") is an emulsifier having at least one radical polymerizable functional group in the molecule (one molecule). The reactive emulsifier is not particularly limited, and one or more kinds of various reactive emulsifiers having radical polymerizable functional groups such as a vinyl group, a propenyl group, an isopropenyl group, a vinyl ether group (vinyloxy group), and an allyl ether group (allyloxy group) may be selected and used. Use of the reactive emulsifier allows the emulsifier to be incorporated into the polymer, and staining derived from the emulsifier is reduced and therefore, it is preferable.

Examples of the reactive emulsifier include reactive emulsifiers having a configuration (or equivalent configuration) formed by introducing a radical polymerizable functional group (radical reactive group) such as a propenyl group or an allyl ether group into a nonionic anionic emulsifier (anionic emulsifier having a nonionic hydrophilic group) such as sodium polyoxyethylene alkyl ether sulfate, polyoxyethylene alkylphenyl ether ammonium sulfate, sodium polyoxyethylene alkylphenyl ether sulfate, and sodium polyoxyethylene alkylsulfosuccinate. Hereinafter, a reactive emulsifier having a configuration formed by introducing a radical polymerizable functional group into an anionic emulsifier will be referred to as "anionic reactive emulsifier". A reactive emulsifier having a configuration formed by introducing a radical polymerizable functional group into a nonionic anionic emulsifier will be referred to as "nonionic anionic reactive emulsifier".

In the case where an anionic reactive emulsifier (especially, nonionic anionic reactive emulsifier) is particularly used, the low staining properties can be improved since the emulsifier is incorporated into the polymer. Further, in the case where the water-insoluble crosslinking agent is a polyfunctional epoxy-based crosslinking agent having an epoxy group, the reactivity of the crosslinking agent can be improved due to its catalytic action. In the case where an anionic reactive emulsifier is not used, the crosslinking reaction is not finished through aging, and it may result in a problem such that the peeling power (adhesive power) of the pressure-sensitive adhesive layer changes with the lapse of time. Further, since the anionic reactive emulsifier is incorporated into the polymer, unlike a quaternary ammonium compound which is used generally as a catalyst for an epoxy-based crosslinking agent (eg., see JP-A 2007-031585), the anionic reactive emulsifier is not deposited on the surface of an adherend, the emulsifier cannot be a cause of whitening staining and therefore, it is preferable.

It is possible to use, as the anionic reactive emulsifier, commercialized products such as trade name "Adeka Reasoap SE-10N" (manufactured by ADEKA CORPORATION), trade name "Aqualon HS-10" (manufactured by DAI-ICHI KOGYO SEIYAKU CO., LTD.), trade name "Aqualon HS-05" (manufactured by DAI-ICHI KOGYO SEIYAKU CO., LTD.), andtradename "AqualonHs-1025" (manufactured by DAI-ICHI KOGYO SEIYAKU CO., LTD.).

Particularly, since impurity ions may be problematic, it is desirable to use an emulsifier from which impurity ions are removed and which has a $SO_4^{2-}$ ion concentration of 100 $\mu$g/g or lower. In the case of an anionic emulsifier, it is desirable to use an ammonium salt emulsifier. As a method for removing impurities from an emulsifier, proper methods such as an ion exchange resin method, a membrane separation method, an impurity precipitation filtration method using an alcohol, and the like may be used.

The blend amount (use amount) of the reactive emulsifier is preferably 0.1 to 10 parts by weight, more preferably 1 to 6 parts by weight, and furthermore preferably 2 to 5 parts by weight per 100 parts by weight in total of the raw material monomers (entire raw material monomers) constituting the acrylic emulsion-based polymer. Adjustment of the blend amount to 0.1 parts by weight or more makes it possible to maintain stable emulsification and therefore, it is preferable. On the other hand, adjustment of the blend amount to 10 parts by weight or lower makes it possible to improve the cohesive strength of the pressure-sensitive adhesive (pressure-sensitive adhesive layer), to suppress staining of an adherend, and to suppress staining with the emulsifier and therefore, it is preferable.

[pH Buffer]

In the case of emulsification polymerization of a monomer mixture by using a reactive emulsifier, a pH buffer may be used in combination if necessary in order to adjust pH,. The pH buffer is not particularly limited as long as it has a pH buffer action, and examples thereof include sodium hydrogen carbonate, potassium hydrogen carbonate, monosodium phosphate, monopotassium phosphate, disodium phosphate, trisodium phosphate, sodium acetate, ammonium acetate, sodium formate, ammonium formate, and the like.

The blend amount of the pH buffer is not particularly limited. The pH buffers may be added before polymerization or during polymerization.

[Polymerization initiator]

It is preferable that in the pressure-sensitive adhesive sheet of the present invention, the acrylic emulsion-based polymer is a polymer obtained by polymerization using a polymerization initiator. The polymerization initiator to be used for emulsion polymerization of the acrylic emulsion-based polymer is not particularly limited, and examples

thereof include azo-based polymerization initiators such as 2,2'-azobisisobutyronitrile, 2,2'-azobis (2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine); persulfuric acid salts such as potassium persulfate and ammonium persulfate; peroxide-based polymerization initiators such as benzoyl peroxide, tert-butyl hydroperoxide, and hydrogen peroxide; redox-based polymerization initiators obtained by using peroxides and reducing agents in combination such as a combination of a peroxide and ascorbic acid (combination of hydrogen peroxide and ascorbic acid, etc.), a combination of a peroxide and a ferrous salt (combination of hydrogen peroxide and a ferrous salt), and a combination of a persulfate and sodium hydrogen sulfite.

The blend amount (use amount) of the polymerization initiator is not particularly limited and can be properly determined depending the kinds of the polymerization initiator or raw material monomers, but is preferably 0.01 to 1 part by weight and more preferably 0.02 to 0.5 parts by weight per 100 parts by weight in total of the raw material monomers (entire raw material monomers) constituting the acrylic emulsion-based polymer. Regarding the blend (dropping) of the polymerization initiator, there are entire dropping polymerization in which all amount is dropped at a time and two-step polymerization in which dropping is carried out separately two times , and the former is a preferable aspect since it is easy to control the particle diameter of the emulsion and it provides an advantageous effect on the antistatic property.

[Chain transfer agent]

It is preferable that in the pressure-sensitive adhesive sheet of the present invention, the acrylic emulsion-based polymer is a polymer obtained by polymerization using a chain transfer agent. As the chain transfer agent, for example, terpene-based compounds such as α-pinene, β-pinene, limonene, terpinolene, and the like can be preferably used. Further, compounds having a thiol group or a hydroxyl group are also commonly known.

Examples of the compounds having a thiol group include mercaptans such as lauryl mercaptan, 2-mercaptoethyl alcohol, dodecyl mercaptan (1-dodecanethiol), mercaptosuccinic acid, and the like; alkyl mercaptopropionates such as n-butyl mercaptopropionate, octylmercaptopropionate, and the like; and alkoxyalkyl mercaptopropionates such as methoxybutyl mercaptopropionate. Examples of the compounds having a hydroxyl group include alcohols such as methyl alcohol, n-propyl alcohol, isopropyl alcohol (IPA), tert-butyl alcohol, and benzyl alcohol, and the like.

The use amount of the chain transfer agent is preferably 0 to 1 part by weight per 100 parts by weight in total of the monomer mixture to be used for the emulsion polymerization. Adjustment of the use amount to 1 part by weight or lower can prevent deterioration of water-proofness, heat resistance and the like due to a decrease in molecular weight and can prevent occurrence of a problem of guide roll staining and therefore, it is preferable.

The acrylic emulsion-based polymer has an average particle diameter of preferably about 80 to 800 nm, and more preferably 100 to 500 nm. If the average particle diameter is within the above range, it is made possible to give a pressure-sensitive adhesive excellent in emulsion polymerization stability, and also excellent in storage stability and mechanical stability and further excellent in physical property balance of a film of a pressure-sensitive adhesive composition after drying, that is, excellent in adhesion to a substrate, wettability to an adherend, water-proofness, cohesive strength, transparency , and mechanical strength of an emulsion to be obtained. If the average particle diameter is 80 nm or more, stable emulsion particles can be obtained and thus the use amount of the emulsifier can be prevented from increasing. On the other hand, if the average particle diameter is 800 nm or lower, the adhesion to a substrate and transparency and water-proofness of the pressure-sensitive adhesive layer to be obtained can be secured.

The average particle diameter of the emulsion particles can be controlled in accordance with the kinds and concentration of an emulsifier to be added at the time of polymerization, the concentration of a polymerization initiator, and the like. Herein, the average particle diameter of the emulsion particles is a numeral value of the median diameter on the basis of volume measured by a laser diffraction/scattering particle size distribution analyzer.

[emulsion polymerization]

The emulsion polymerization of the acrylic emulsion-based polymer is carried out by emulsifying monomer components in water by a conventional method and thereafter carrying out emulsion polymerization. Accordingly, a water dispersion (polymer emulsion) containing the acrylic emulsion-based polymer as a base polymer can be prepared. A method for the emulsion polymerization is not particularly limited, and examples thereof include known emulsion polymerization methods such as a batch loading method (batchpoly merization method), a monomer dropping method, and a monomer emulsion dropping method. In the monomer dropping method and the monomer emulsion dropping method, continuous dropping or separate dropping is selected properly. These methods may be properly employed in combination. The reaction conditions or the like may be selected properly, but the polymerization temperature is, for example, preferably about 40 to 95°C and the polymerization time is preferably about 30 minutes to 24 hours.

A solvent-insoluble matter (the ratio of solvent-insoluble components, may be referred to as "gelation ratio") of the acrylic emulsion-based polymer is 70% (by weight) or more, preferably 75% by weight or more, and more preferably

80% by weight or more from the viewpoint of low staining properties and a proper peeling power. If the solvent-insoluble matter is lower than 70% by weight, since a large quantity of monomer is contained in the acrylic emulsion-based polymer and the low molecular weight components in the pressure-sensitive adhesive layer cannot be sufficiently reduced merely by crosslinking effect, the adherend staining derived from the low molecular weight components ore the like may be caused or the peeling power may become too high. The solvent-insoluble matter may be controlled based on the polymerization initiator, the reaction temperature, the kinds of the emulsifier and raw material monomers, and the like. The upper limit of the solvent-insoluble matter is not particularly limited; however, it is for example 99% by weight.

In the present invention, the solvent-insoluble matter of the acrylic emulsion-based polymer is a value calculated by the following "measurement method for solvent-insoluble matter".

(Measurement method for solvent-insoluble matter)

After about 0.1 g of an acrylic emulsion-based polymer is sampled and wrapped with a porous tetrafluoroethylene sheet with an average pore diameter of 0.2 μm (trade name: "NTF1122", manufactured by NITTO DENKO CORPORATION), the wrapped body was tied with a kite string and the weight thereof is measured as a weight before immersion. The weight before immersion is the total weight of the acrylic emulsion-based polymer (sampled in the above), the tetrafluoroethylene sheet, and the kite string. The total weight of the tetrafluoroethylene sheet and the kite string is also measured as a wrapping weight.

Next, the acrylic emulsion-based polymer wrapped with the tetrafluoroethylene sheet and tied with the kite string (referred to as "sample") is put in a 50 ml container filled with ethyl acetate and allowed to stand still at 23°C for 7 days. Thereafter (after ethyl acetate treatment), the sample is taken out of the container and transferred to an aluminum cup and dried at 130°C for 2 hours in a drier to remove ethyl acetate. Successively, the weight is measured as a weight after immersion. The solvent-insoluble matter is calculated according to the following equation:

$$\text{Solvent-insoluble matter (\% by weight)} = (a - b)/(c - b) \times 100$$

wherein, a is weight after immersion; b is wrapping weight; and c is weight before immersion.

The weight average molecular weight (Mw) of a solvent-soluble matter (may be referred to as "sol matter") in the acrylic emulsion-basedpolymer is preferably 40000 to 200000, more preferably 50000 to 150000, andfurthermorepreferably60000 to 100000. If the weight average molecular weight of the solvent-soluble matter in the acrylic emulsion-based polymer is 40000 or more, the wettability of the pressure-sensitive adhesive composition to an adherend is improved and the tackiness to the adherend is improved. If the weight average molecular weight of the solvent-soluble matter in the acrylic emulsion-based polymer is 200000 or lower, the remaining amount of the pressure-sensitive adhesive composition on an adherend is decreased and the low staining properties for the adherend is improved. The weight average molecular weight of the solvent-soluble matter in the acrylic emulsion-based polymer can be measured by subjecting a sample (solvent-soluble matter of the acrylic emulsion-based polymer) obtained by air blow drying, under normal temperature, of the treated solution (ethyl acetate solution) after the ethyl acetate treatment, the solution being obtained in the measurement of the solvent-insoluble matter of the acrylic emulsion-based polymer, to GPC (gel permeation chromatography). Examples of the specific measurement method include the following methods.

[Measurement method]

The GPC measurement is carried out using a GPC apparatus "HLC-8220 GPC" manufactured by TOSOH CORPORATION and the molecular weight is measured in terms of polystyrene. The measurement conditions are as follows.
Sample concentration: 0.2% by weight (THF solution)
Sample injection amount: 10 μl
Eluent: THF
Flow speed: 0.6 ml/minute
Measurement temperature: 40°C
Column:

Sample column: one TSK guard column Super HZ-H + two TSK gel Super HZM-H

Reference column: one TSK gel Super H-RC

Detector: differential refractometer

[Crosslinking agent]

The pressure-sensitive adhesive composition is provided with excellent heat resistance by properly crosslinking the acrylic emulsion-based polymer and therefore, it is a preferable aspect. The crosslinking agent to be used for the present invention is not particularly limited, and examples thereof to be used preferably include isocyanate compounds, epoxy compounds, melamine compounds, aziridine derivatives, metal chelate compounds, and the like. Among them, in terms of mainly obtaining proper cohesive strength, isocyanate compounds are particularly preferably used. These compounds may be used alone or in combination of two or more thereof.

Particularly, in the present invention, use of a water-insoluble crosslinking agent as the crosslinking agent is more preferable. The water-insoluble crosslinking agent is a water-insoluble compound, which is a compound having two or more functional groups (e.g., 2 to 6) which can be reacted with a carboxyl group in the molecule (in one molecule), and more preferably the number of the functional groups which can be reacted with a carboxyl group in one molecule is 3 to 5. As the number of the functional groups which can be reacted with a carboxyl group in one molecule is higher, the pressure-sensitive adhesive composition is more densely crosslinked (that is, the crosslinked structure of a polymer constituting the pressure-sensitive adhesive layer becomes dense). Therefore, the wet spreading of the pressure-sensitive adhesive layer after the formation of the pressure-sensitive adhesive layer can be prevented. Further, the polymer forming the pressure-sensitive adhesive layer is bounded so that the functional groups (carboxyl groups) in the pressure-sensitive adhesive layer exist unevenly on the adherend surface, and thus an increase in peeling power (adhesive power) between the pressure-sensitive adhesive layer and the adherend with the lapse of time can be prevented. On the other hand, in the case where the number of the functional groups which can be reacted with a carboxyl group in one molecule is too high beyond 6, a gelling product may be formed.

Examples of the functional group of the water-insoluble crosslinking agent which can be reacted with a carboxyl group include, but are not particularly limited to, an epoxy group, an isocyanate group, a carbodiimide group, and the like. Among them, from the viewpoint of reactivity, an epoxy group is preferable. Further, from the viewpoint of advantages in less remaining of unreacted products and low staining at the time of crosslinking reaction owing to high reactivity and from the viewpoint of capability of preventing an increase in peeling power (adhesive power) with the lapse of time between an adherend and the pressure-sensitive adhesive layer owing to an unreacted carboxyl group in the pressure-sensitive adhesive layer, a glycidylamino group is preferable. That is, as the water-insoluble crosslinking agent, an epoxy-based crosslinking agent with epoxy group is preferable and particularly, a crosslinking agent with glycidylamino group (glycidylamino-basedcrosslinkingagent) is preferable. In the case where the water-insoluble crosslinking agent is an epoxy-based crosslinking agent (particularly, glycidylamino-based crosslinking agent), the number of epoxy (particularly, glycidylamino) group in one molecule is 2 or more (e.g., 2 to 6) and preferably 3 to 5.

The water-insoluble crosslinking agent is a water-insoluble compound. Herein, "water-insoluble" refers to the solubility of 5 parts by weight or lower, preferably 4 parts by weight or lower, and more preferably 3 parts by weight or lower at 25°C in 100 parts by weight of water. Use of the water-insoluble crosslinking agent improves the low staining properties since the crosslinking agent remaining without crosslinking hardly causes whitening staining to be generated on an adherend under high humidity environments. In the case of a water-soluble crosslinking agent, the remaining crosslinking agent is dissolved in water and tends to be transferred easily to an adherend under high humidity environments and therefore, it easily causes whitening staining. Further, as compared with the water-soluble crosslinking agent, the water-insoluble crosslinking agent highly contributes to crosslinking reaction (reaction with carboxyl group) and highly effectively prevents an increase in peeling power (adhesive power) with the lapse of time. Further, due to high reactivity to crosslinking reaction, the water-insoluble crosslinking agent quickly promotes crosslinking reaction by aging and thus prevents an increase in peeling power (pressure-sensitive adhesive power) with the lapse of time between an adherend and the pressure-sensitive adhesive layer owing to an unreacted carboxyl group in the pressure-sensitive adhesive layer.

The solubility of the crosslinking agent in water can be measured, for example, as follows.

[Measurement method for solubility in water]

Water (25°C) and a crosslinking agent in the same weight are mixed by a stirrer at a rotation rate of 300 rpm for 10 minutes and a water phase and an oil phase are separated by centrifugal separation. Next, the water phase is sampled and dried at 120°C for 1 hour, and the non-volatile matter in the water phase is measured based on the drying weight loss (parts by weight of non-volatile matter per 100 parts by weight of water).

Specifically, examples of the water-insoluble crosslinking agent include glycidylamino-based crosslinking agents such as 1,3-bis(N,N-diglycidylaminomethyl) cyclohexane (e.g., trade name "TETRAD-C" etc., manufactured by MITSUBISHI GAS CHEMICAL COMPANY, INC.) [solubility of 2 parts by weight or lower in 100 parts by weight of water at 25°C] and 1,3-bis(N,N-diglycidylaminomethyl)benzene (trade name "TETRAD-X" etc., manufactured by MITSUBISHI

GAS CHEMICAL COMPANY, INC.) [solubility of 2 parts by weight or lower in 100 parts by weight of water at 25°C]; other epoxy-based crosslinking agents such as tris (2,3-epoxypropyl) isocyanurate (e.g., trade name: "TEPIC-G", manufactured by NISSAN CHEMICAL INDUSTRIES, LTD.) [solubility of 2 parts by weight or lower in 100 parts by weight of water at 25°C]; and the like.

The blend amount of the water-insoluble crosslinking agent (content in the pressure-sensitive adhesive composition of the present invention) is preferably 1.1 to 2.4 parts by weight and more preferably 1. 2 to 2.3 parts by weight per 100 parts by weight of the acrylic emulsion-based polymer (solid matter). If the amount is within the range, the adhesion of the pressure-sensitive adhesive sheet to an adherend surface can be improved and therefore, it is a preferable aspect.

[Ionic compound]

The pressure-sensitive adhesive composition contains the acrylic emulsion-based polymer and an ionic compound. The ionic compound is not particularly limited, and it is preferable to contain an ionic liquid and/or an alkali metal salt. Addition of these ionic compounds can give excellent antistatic properties.

Use of the ionic liquid as the antistatic agent can give a pressure-sensitive adhesive layer having a high antistatic effect without deteriorating the adherability. The reason why use of the ionic liquid can give an excellent antistatic property is not made clear in detail; however, it is supposed that since the ionic liquid is in a liquid state, the molecular motion easy occurs and thus an excellent antistatic function is obtained. Particularly, in the case of preventing electrification of an adherend, it is supposed that a trace amount of the ionic liquid is transferred to the adherend and accordingly, the peeling electrification of the adherend can be prevented favorably.

Further, the ionic liquid is in a liquid state at room temperature (25°C) and therefore, it can be added and then dispersed or dissolved easily in a pressure-sensitive adhesive as compared with a solid salt. Further, since the ionic liquid has no vapor pressure (non volatility), it is not lost with the lapse of time and thus continuously gives the antistatic property. The ionic liquid refers to a molten salt (ionic compound) in a liquid state at room temperature (25°C).

As the ionic liquid, those which are composed of an organic cationic component represented by the following general formulas (A) to (E) and an anionic component are preferably used. The ionic liquids having these cations give a further excellent antistatic function.

[Formula 3]

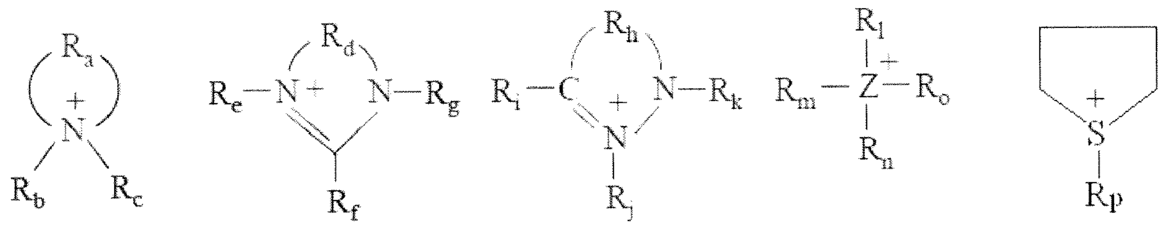

(A) (B) (C) (D) (E)

In the formula (A), $R_a$ represents a hydrocarbon group with 4 to 20 carbon atoms or a portion of the hydrocarbon group is optionally substituted with a heteroatom; and $R_b$ and $R_c$ are the same or different, and each represent hydrogen or a hydrocarbon group with 1 to 16 carbon atoms, or a portion of the hydrocarbon group is optionally substituted with a heteroatom; provided that the nitrogen atom contains a double bond, there is no $R_c$.

In the formula (B), $R_d$ represents a hydrocarbon group with 2 to 20 carbon atoms or a portion of the hydrocarbon group is optionally substituted with a heteroatom; and $R_e$, $R_f$, and $R_g$ are the same or different, and each represent hydrogen or a hydrocarbon group with 1 to 16 carbon atoms, or a portion of the hydrocarbon group is optionally substituted with a heteroatom.

In the formula (C), $R_n$ represents a hydrocarbon group with 2 to 20 carbon atoms or a portion of the hydrocarbon group is optionally substituted with a heteroatom; and $R_i$, $R_j$, and $R_k$ are the same or different, and each represent hydrogen or a hydrocarbon group with 1 to 16 carbon atoms, or a portion of the hydrocarbon group is optionally substituted with a heteroatom.

In the formula (D), Z represents a nitrogen, sulfur or phosphorus atom; $R_l$, $R_m$, $R_n$, and $R_o$ are the same or different, and each represent a hydrocarbon group with 1 to 20 carbon atoms or a portion of the hydrocarbon group is optionally substituted with a heteroatom; provided that Z is a sulfur atom, there is no $R_o$.

In the formula (E), $R_p$ represents a hydrocarbon group with 1 to 18 carbon atoms or is optionally a functional

group formed by partially substituting the hydrocarbon group with a heteroatom.

Examples of the cation represented by the formula (A) include a pyridinium cation, a piperidinium cation, a pyrrolidinium cation, a cation having a pyrroline skeleton, a cation having a pyrrole skeleton, a morpholinium cation, and the like.

Specific examples thereof include 1-ethylpyridinium cation, 1-butylpyridinium cation, 1-hexylpyridinium cation, 1-butyl-3-methylpyridinium cation, 1-butyl-4-methylpyridinium cation, 1-hexyl-3-methylpyridinium cation, 1-butyl-3,4-dimethylpyridinium cation, 1-ethyl-3-hydroxymethylpyridinium cation, 1,1-dimethylpyrrolidinium cation, 1-ethyl-1-methylpyrrolidinium cation, 1-methyl-1-propylpyrrolidinium cation, 1-methyl-1-butylpyrrolidinium cation, 1-methyl-1-pentylpyrrolidinium cation, 1-methyl-1-hexylpyrrolidinium cation, 1-methyl-1-heptylpyrrolidinium cation, 1-ethyl-1-propylpyrrolidinium cation, 1-ethyl-1-butylpyrrolidinium cation, 1-ethyl-1-pentylpyrrolidinium cation, 1-ethyl-1-hexylpyrrolidinium cation, 1-ethyl-1-heptylpyrrolidinium cation, 1,1-dipropylpyrrolidinium cation, 1-propyl-1-butylpyrrolidinium cation, 1,1-dibutylpyrrolidinium cation, 1-propylpiperidinium cation, 1-pentylpiperidinium cation, 1,1-dimethylpiperidinium cation, 1-methyl-1-ethylpiperidinium cation, 1-methyl-1-propylpiperidinium cation, 1-methyl-1-butylpiperidinium cation, 1-methyl-1-pentylpiperidinium cation, 1-methyl-1-hexylpiperidinium cation, 1-methyl-1-heptylpiperidinium cation, 1-ethyl-1-propylpiperidinium cation, 1-ethyl-1-butylpiperidinium cation, 1-ethyl-1-pentylpiperidinium cation, 1-ethyl-1-hexylpiperidinium cation, 1-ethyl-1-heptylpiperidinium cation, 1,1-dipropylpiperidinium cation, 1-propyl-1-butylpiperidinium cation, 1,1-dibutylpiperidinium cation, 2-methyl-1-pyrroline cation, 1-ethyl-2-phenylindole cation, 1,2-dimethylindole cation, 1-ethylcarbazole cation, and N-ethyl-N-methylmorpholinium cation.

Examples of the cation represented by the formula (B) include an imidazolium cation, a tetrahydropyrimidinium cation, a dihydropyrimidinium cation, and the like.

Specific examples thereof include 1,3-dimethylimidazolium cation,1,3-diethylimidazolium cation, 1-ethyl-3-methylimidazolium cation, 1-butyl-3-methylimidazolium cation, 1-hexyl-3-methylimidazolium cation, 1-octyl-3-methylimidazolium cation, 1-decyl-3-methylimidazolium cation, 1-dodecyl-3-methylimidazolium cation, 1-tetradecyl-3-methylimidazolium cation, 1,2-dimethyl-3-propylimidazolium cation, 1-ethyl-2,3-dimethylimidazolium cation, 1-butyl-2,3-dimethylimidazolium cation, 1-hexyl-2,3-dimethylimidazolium cation, 1-(2-methokyethyl)-3-methylimidazolium cation, 1-allyl-3-methylimidazolium cation, 1,3-dimethyl-1,4,5,6-tetrahydropyrimidinium cation, 1,2,3-trimethyl-1,4,5,6-tetrahydropyrimidinium cation, 1,2,3,4-tetramethyl-1,4,5,6-tetrahydropyrimidinium cation, 1,2,3,5-tetramethyl-1,4,5,6-tetrahydropyrimidinium cation, 1,3-dimethyl-1,4-dihydropyrimidinium cation, 1,3-dimethyl-1,6-dihydropyrimidinium cation, 1,2,3-trimethyl-1,4-dihydropyrimidinium cation, 1,2,3-trimethyl-1,6-dihydropyrimidinium cation, 1,2,3,4-tetramethyl-1,4-dihydropyrimidinium cation, 1,2,3,4-tetramethyl-1,6-dihydropyrimidinium cation, and the like.

Examples of the cation represented by the formula (C) include a pyrazolium cation, a pyrazolinium cation, and the like.

Specific examples thereof include 1-methylpyrazolium cation, 3-methylpyrazolium cation, 1-ethyl-2-methylpyrazolinium cation, 1-ethyl-2,3,5-trimethylpyrazolium cation, 1-propyl-2,3,5-trimethylpyrazolium cation, 1-butyl-2,3,5-trimethylpyrazolium cation, 1-ethyl-2,3,5-trimethylpyrazolinium cation, 1-propyl-2,3,5-trimethylpyrazolinium cation, 1-butyl-2,3,5-trimethylpyrazolinium cation, and the like.

Examples of the cation represented by the formula (D) include a tetraalkylammonium cation, a trialkylsulfonium cation, a tetraalkylphosphonium cation and those which can be obtained by substituting a portion of the alkyl group with an alkenyl group, an alkoxyl group, a hydroxyl group, a cyano group and also an epoxy group.

Specific examples thereof include tetramethylammonium cation, tetraethylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, N,N-diethyl-N-methyl-N-(2-methoxyethyl)ammonium cation, glycidyltrimethylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrahexylphosphonium cation, tetraoctylphosphonium cation, triethylmethylphosphonium cation, tributylethylphosphonium cation, trimethyldecylphosphonium cation, diallyldimethylammonium cation, tributyl-(2-methoxyethyl)phosphonium cation, and the like. Among them, preferably used are an asymmetric tetraalkylammonium cation, a trialkylsulfonium cation, and a tetraalkylphosphonium cation such as triethylmethylammonium cation, tributylethylammonium cation, trimethyldecylammonium cation, diethylmethylsulfonium cation, dibutylethylsulfonium cation, dimethyldecylsulfonium cation, triethylmethylphosphonium cation, tributylethylphosphonium cation, and trimethyldecylphosphonium cation, as well as N,N-diethyl-N-methyl-N-(2-methoxyethyl)ammonium cation, glycidyltrimethylammonium cation, diallyldimethylammonium cation, N,N-dimethyl-N-ethyl-N-propylammonium cation, N,N-dimethyl-N-ethyl-N-butylammonium cation, N,N-dimethyl-N-ethyl-N-pentylammonium cation, N,N-dimethyl-N-ethyl-N-hexylammonium cation, N,N-dimethyl-N-ethyl-N-heptylammonium cation, N,N-dimethyl-N-ethyl-N-nonylammonium cation, N,N-dimethyl-N,N-dipropylammonium cation, N,N-diethyl-N-propyl-N-butylammonium cation, N,N-dimethyl-N-propyl-N-pentylammonium cation, N,N-dimethyl-N-propyl-N-hexylammonium cation, N,N-dimethyl-N-propyl-N-heptylammonium cation, N,N-dimethyl-N-butyl-N-hexylammonium cation, N,N-diethyl-N-butyl-N-heptylammonium cation, N,N-dimethyl-N-pentyl-N-hexylammonium cation, N,N-dimethyl-N,N-dihexylammonium cation, trimethylheptylammonium cation, N,N-diethyl-N-methyl-N-propylammonium cation, N,N-diethyl-N-methyl-N-pentylammonium cation, N,N-diethyl-N-methyl-N-heptylammonium cation, N,N-diethyl-N-propyl-N-pentylammonium cation, triethylpropylammonium cation, triethylpentylammonium cation, triethylheptylammonium cation, N, N-dipropyl-N-methyl-N-ethylammonium cation, N,N-dipropyl-N-methyl-N-pentylammonium cation, N,N-dipropyl-N-butyl-N-hexylammonium cation, N,N-dipropyl-N,N-dihexylammonium cation, N,N-dibutyl-N-methyl-N-pentylammonium cation, N,N-dibutyl-N-methyl-N-hexylammonium cation, trioctylmethylammonium cation, N-methyl-N-ethyl-N-propyl-N-pentylammonium cation, and choline cation.

Examples of the cation represented by the formula (E) include a sulfonium cation and the like. Specific examples of Rp in the formula (E) include a methyl group, an ethyl group, a propyl group, a butyl group, a hexyl group, an octyl group, a nonyl group, a decyl group, a dodecyl group, a tridecyl group, a tetradecyl group, an octadecyl group, and the like.

The ionic liquid contains at least one kind cation selected from the group consisting of cations represented by the following formulas (a) to (d). These cations are those represented by the above formulas (A) and (B):

[Formula 4]

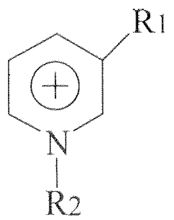
(a)

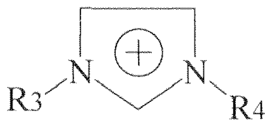
(b)

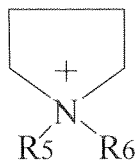
(c)

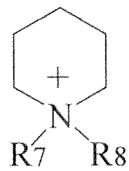
(d)

[In the formula (a), $R_1$ represents hydrogen or a hydrocarbon group with 1 to 3 carbon atoms; and $R_2$ represents hydrogen or a hydrocarbon group with 1 to 7 carbon atoms.]

[In the formula (b), $R_3$ represents hydrogen or a hydrocarbon group with 1 to 3 carbon atoms; and $R_4$ represents hydrogen or a hydrocarbon group with 1 to 7 carbon atoms.]

[In the formula (c), $R_5$ represents hydrogen or a hydrocarbon group with 1 to 3 carbon atoms; and $R_6$ represents hydrogen or a hydrocarbon group with 1 to 7 carbon atoms.]

[In the formula (d), $R_7$ represents hydrogen or a hydrocarbon group with 1 to 3 carbon atoms; and $R_8$ represents hydrogen or a hydrocarbon group with 1 to 7 carbon atoms.]

On the other hand, the anionic component is not particularly limited as long as it can be an ionic liquid, and examples thereof include $Cl^-$, $Br^-$, $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $(CF_3SO_2)_2N^-$, $Li(C_3F_7SO_2)_2N$, $Li (C_4F_9SO_2)_2N$, $(CF_3SO_2)_3C^-$, $AsF_6^-$, $SbF_6^-$, $NbF_6^-$, $TaF_6^-$, $F(HF)n^-$, $(CN)_2N^-$,$C_4F_9SO_3^-$, $(C_2F_5SO_2)_2N^-$, $C_3F_7COO^-$, $(CF_3SO_2) (CF_3CO)N^-$, $C_9H_{19}COO^-$, $(CH_3)_2PO_4^-$, $(C_2H_5)_2PO_4^-$, $C_2H_5OSO_3^-$, $C_6H_{13}OSO_3^-$, $C_8H_{17}OSO_3^-$, $CH_3(OC_2H_4)_2OSO_3^-$, $C_6H_4(CH_3)SO_3^-$, $(C_2F_5)_3PF_3^-$, $CH_3CH(OH)COO^-$, $(FSO_2)_2N^-$, and the like. Among them, particularly, an anionic component containing a fluorine atom is preferably used since an ionic compound with a low melting point can be obtained. Many imide-containing anionic components provide hydrophobicity, cause no dissociation even if added to a water dispersion type pressure-sensitive adhesive, generate no agglomerate and the like and therefore, they are preferably used. Further, a sulfonyl-containing anionic component is excellent in stability in water, electric conductivity, heat stability or the like and therefore, it is preferably used.

An anion defined by the following formula (F) is also usable as the anionic component.

[Formula 5]

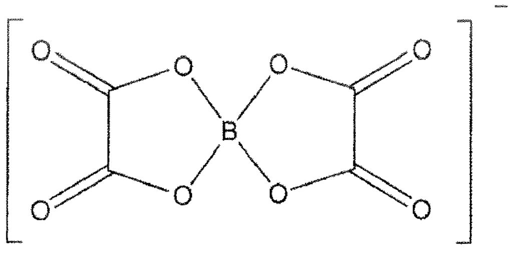
(F)

As the anionic component, particularly, an anionic component containing a fluorine atom is particularly preferably

used since an ionic liquid with a low melting point can be obtained.

The ionic liquid used in the present invention is properly selected from combinations of the above cationic components and anionic components, and specific examples thereof include 1-butylpyridinium tetrafluoroborate, 1-butylpyridinium hexafluorophosphate, 1-butyl-3-methylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium bis(trifluoromethanesulfonyl)imide, 1-methyl-1-butylpyrrolidinium bis(trifluoromethanesulfonyl)imide, 1-methyl-1-pentylpyrrolidinium bis(trifluoromethanesulfonyl)imide, 1-methyl-1-hexylpyrrolidinium bis(trifluoromethanesulfonyl)imide, 1-methyl-1-heptylpyrrolidinium bis(trifluoromethanesulfonyl)imide, 1-ethyl-1-propylpyrrolidinium bis(trifluoromethanesulfonyl)imide, 1-ethyl-1-butylpyrrolidinium bis(trifluoromethanesulfonyl)imide, 1-ethyl-1-pentylpyrrolidinium bis(trifluoromethanesulfonyl)imide, 1-ethyl-1-hexylpyrrolidinium bis(trifluoromethanesulfonyl)imide, 1-ethyl-1-heptylpyrrolidinium bis(trifluoromethanesulfonyl)imide, 1,1-dipropylpyrrolidinium bis(trifluoromethanesulfonyl)imide, 1-propyl-1-butylpyrrolidinium bis (trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1, 1-dimethylpiperidinium bis(trifluoromethanesulfonyl)imide, 1-methyl-1-ethylpiperidinium bis(trifluoromethanesulfonyl)imide, 1-methyl-1-propylpiperidinium bis(trifluoromethanesulfonyl)imide, 1-methyl-1-butylpiperidinium bis(trifluoromethanesulfonyl)imide, 1-methyl-1-pentylpiperidinium bis(trifluoromethanesulfonyl)imide, 1-methyl-1-hexylpiperidinium bis(trifluoromethanesulfonyl)imide, 1-methyl-1-heptylpiperidinium bis(trifluoromethanesulfonyl)imide, 1-ethyl-1-propylpiperidinium bis(trifluoromethanesulfonyl)imide, 1-ethyl-1-butylpiperidinium bis(trifluoromethanesulfonyl)imide, 1-ethyl-1-pentylpiperidinium bis(trifluoromethanesulfonyl)imide, 1-ethyl-1-hexylpiperidinium bis(trifluoromethanesulfonyl)imide, 1-ethyl-1-heptylpiperidinium bis(trifluoromethanesulfonyl)imide, 1,1-dipropylpiperidinium bis(trifluoromethanesulfonyl)imide, 1-propyl-1-butylpiperidinium bis(trifluoromethanesulfonyl)imide, 1,1-dibutylpiperidinium bis(trifluoromethanesulfonyl)imide, 1,1-dimethylpyrrolidinium bis(pentafluoroethanesulfonyl)imide, 1-methyl-1-ethylpyrrolidinium bis(pentafluoroethanesulfonyl)imide, 1-methyl-1-propylpyrrolidinium bis(pentafluoroethanesulfonyl)imide, 1-methyl-1-butylpyrrolidinium bis(pentafluoroethanesulfonyl)imide, 1-methyl-1-pentylpyrrolidinium bis(pentafluoroethanesulfonyl)imide, 1-methyl-1-hexylpyrrolidinium bis(pentafluoroethanesulfonyl)imide, 1-methyl-1-heptylpyrrolidinium bis(pentafluoroethanesulfonyl)imide, 1-ethyl-1-propylpyrrolidinium bis(pentafluoroethanesulfonyl)imide, 1-ethyl-1-butylpyrrolidinium bis(pentafluoroethanesulfonyl)imide, 1-ethyl-1-pentylpyrrolidinium bis(pentafluoroethanesulfonyl)imide, 1-ethyl-1-hexylpyrrolidinium bis(pentafluoroethanesulfonyl)imide, 1-ethyl-1-heptylpyrrolidinium bis(pentafluoroethanesulfonyl)imide, 1,1-dipropylpyrrolidinium bis (pentafluoroethanesulfonyl)imide, 1-propyl-1-butylpyrrolidinium bis(pentafluoroethanesulfonyl)imide, 1,1-dibutylpyrrolidinium bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium bis(pentafluoroethanesulfonyl)imide, 1-methyl-1-propylpiperidinium bis(pentafluoroethanesulfonyl) imide, 1-methyl-1-butylpiperidinium bis(pentafluoroethanesulfonyl)imide, 1-methyl-1-pentylpiperidinium bis(pentafluoroethanesulfonyl)imide, 1-methyl-1-hexylpiperidinium bis(pentafluoroethanesulfonyl)imide, 1-methyl-1-heptylpiperidinium bis(pentafluoroethanesulfonyl)imide, 1-ethyl-1-propylpiperidinium bis(pentafluoroethanesulfonyl)imide, 1-ethyl-1-butylpiperidinium bis(pentafluoroethanesulfonyl)imide, 1-ethyl-1-pentylpiperidinium bis(pentafluoroethanesulfonyl)imide, 1-ethyl-1-hexylpiperidinium bis(pentafluoroethanesulfonyl)imide, 1-ethyl-1-heptylpiperidinium bis(pentafluoroethanesulfonyl)imide, 1,1-dipropylpiperidinium bis(pentafluoroethanesulfonyl)imide, 1-propyl-1-butylpiperidinium bis (pentafluoroethanesulfonyl)imide, 1,1-dibutylpiperidinium bis(pentafluoroethanesulfonyl)imide, 2-methyl-1-pyrroline tetrafluoroborate, 1-ethyl-2-phenylindole tetrafluoroborate, 1,2-dimethylindole tetrafluoroborate, 1-ethylcarbazole tetrafluoroborate, 1-ethyl-3-methylimidazolium tetrafluoroborate, 1-ethyl-3-methylimidazolium acetate, 1-ethyl-3-methylimidazolium trifluoroacetate, 1-ethyl-3-methylimidazolium heptafluorobutyrate, 1-ethyl-3-methylimidazolium trifluoromethanesulfonate, 1-ethyl-3-methylimidazolium perfluorobutanesulfonate, 1-ethyl-3-methylimidazolium dicyanamide, 1-ethyl-3-methylimidazolium bis(trifluoromethanesulfonyl)imide, 1-ethyl-3-methylimidazolium bis(pentafluoroethanesulfonyl)imide, 1-ethyl-3-methylimidazolium tris(trifluoromethanesulfonyl)methide, 1-butyl-3-methylimidazolium tetrafluoroborate, 1-butyl-3-methylimidazolium hexafluorophosphate, 1-butyl-3-methylimidazolium trifluoroacetate, 1-butyl-3-methylimidazolium heptafluorobutyrate, 1-butyl-3-methylimidazolium trifluoromethanesulfonate, 1-butyl-3-methylimidazolium perfluorobutanesulfonate, 1-butyl-3-methylimidazolium bis(trifluoromethanesulfonyl)imide, 1-hexyl-3-methylimidazolium bromide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium trifluoromethanesulfanate, 1-octyl-3-methylimidazolium tetrafluoroborate, 1-octyl-3-methylimidazolium hexafluorophosphate, 1-hexyl-2,3-dimethylimidazolium tetrafluoroborate, 1,2-dimethyl-3-propylimidazolium bis(trifluoromethanesulfonyl)imide, 1-methylpyrazolium tetrafluoroborate, 2-methylpyrazolium tetrafluoroborate, 1-ethyl-2,3,5-trimethylpyrazolium bis(trifluoromethanesulfonyl)imide, 1-propyl-2,3,5-trimethylpyrazolium bis(trifluoromethanesulfonyl)imide, 1-butyl-2,3,5-trimethylpyrazolium bis(trifluoromethanesulfonyl)imide, 1-ethyl-2,3,5-trimethylpyrazolium bis(pentafluoroethanesulfonyl)imide, 1-propyl-2,3,5-trimethylpyrazolium bis(pentafluoroethanesulfonyl)imide, 1-butyl-2,3,5-trimethylpyrazolium bis(pentafluoroethanesulfonyl)imide, 1-ethyl-2,3,5-trimethylpyrazolium bis(trifluoromethanesulfonyl)trifluoroacetamide, 1-propyl-2,3,5-trimethylpyrazolium bis(trifluoromethanesulfonyl)trifluoroacetamide, 1-butyl-2,3,5-trimethylpyrazolium bis(trifluoromethanesulfonyl)trifluoroacetamide, 1-ethyl-2,3,5-trimethylpyrazolinium bis(trifluoromethanesulfonyl)imide, 1-propyl-2,3,5-trimethylpyrazolinium bis(trifluoromethanesulfonyl)imide, 1-butyl-2,3,5-trimethylpyrazolinium bis(trifluoromethanesulfonyl)imide, 1-ethyl-2,3,5-trimethylpyrazolinium bis(pentafluoroethanesulfonyl)imide, 1-propyl-2,3,5-trimethylpyrazolinium bis(pentafluoroethanesulfonyl)imide, 1-butyl-2,3,5-trimethylpyrazolinium bis(pentafluoroethanesulfonyl)imide, 1-ethyl-2,3,5-trimethylpyrazolinium bis(trifluoromethanesulfonyl)trifluoroacetamide, 1-propyl-2,3,5-trimethylpyrazolinium bis(trifluoromethanesulfonyl)trifluoroacetamide, 1-butyl-2,3,5-trimethylpyrazolinium bis(trifluoromethanesulfonyl)trifluoroacetamide, tetrapentylammonium trifluoromethanesulfonate, tetrapentylammonium bis(trifluoromethanesulfonyl)imide, tetrahexylammonium trifluoromethanesulfonate, tetrahexylammonium bis(trifluoromethanesulfonyl)imide, tetrabutylammonium trifluoromethanesulfonate, tetraheptylammonium bis(trifluoromethanesulfonyl)imide, diallyldimethylammonium tetrafluoroborate, diallyldimethylammonium trifluoromethanesulfonate, diallyldimethylammonium bis(trifluoromethanesulfonyl)imide, diallyldimethylammonium bis(pentafluoroethanesulfonyl)imide, N,N-diethyl-N-methyl-N-(2-methoxyethyl)ammonium tetrafluoroborate, N,N-diethyl-N-methyl-N-(2-methoxyethyl)ammonium trifluoromethanesulfonate, N,N-diethyl-N-methyl-N-(2-methoxyethyl)ammonium bis(trifluoromethanesulfonyl)imide, N,N-diethyl-N-methyl-N-(2-methoxyethyl)ammonium bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium bis(pentafluoroethanesulfonyl)imide, tetraoctylphosphonium trifluoromethanesulfonate, tetraoctylphosphonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-heptylammonium bis(trifluoromethanesulfonyl)imide, N,N-dimethyl-N-butyl-N-hexylammonium bis(trifluoromethanesulfonyl)imide, N,N-dimethyl-N-butyl-N-heptylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-heptylammonium bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, 1-butylpyridinium (trifluoromethanesulfonyl)trifluoroacetamide, 1-butyl-3-methylpyridinium (trifluoromethanesulfonyl)trifluoroacetamide, 1-ethyl-3-methylimidazolium (trifluoromethanesulfonyl)trifluoroacetamide, N-ethyl-N-methylmorpholinium thiocyanate, 4-ethyl-4-methylmorpholinium methylcarbonate, 1-ethyl-3-methylimidazolium thiocyanate, 1-butyl-3-methylimidazolium thiocyanate, 1-ethyl-3-methylimidazolium tetracyanoborate, 1-ethyl-3-methylimidazolium tris(pentafluoroethyl)trifluorophosphate, 1-ethyl-3-methylimidazolium bis(fluorosulfonyl)imide, triethylsulfonium bis(trifluoromethylsulfonyl)imide, and the like.

Commercialized products maybe used as the above-mentioned ionic liquid and those which are synthesized as follows are also usable. A method for synthesizing an ionic liquid is not particularly limited as long as the method gives an aimed ionic liquid, and in general, a halogenation method, a hydroxylation method, an acid esterification method, a complex forming method, a neutralization method, and the like as described in a document, "Ionic liquids-Front line and future for developments-" [published by CMC Co., Ltd.] may be employed.

The halogenation method, hydroxylation method, complex forming method, and neutralization method will be described with reference to a synthesis method for a nitrogen-containing onium salt, and other ionic liquids such as a sulfur-containing onium salt and a phosphorus-containing onium salt can be also obtained by similar techniques.

The halogenation method is a method carried out by reaction as shown in the following formulas (1) to (3). First, a halide is obtained by reaction of a tertiary amine and a haloalkyl (reaction formula (1), a halogen to be used is chlorine, bromine, or iodine) . An aimed ionic liquid ($R_4NA$) is obtained by allowing the obtained halide to react with an acid (HA) having an anionic structure ($A^-$) of the aimed ionic liquid or a salt (MA, M is a cation forming a salt with the aimed anion, such as ammonium, lithium, sodium, or potassium).

[Formula 6]

(1) $R_3N + RX \rightarrow R_4NX$ (X: Cl, Br, I)
(2) $R_4NX + HA \rightarrow R_4NA + HX$
(3) $R_4NX + MA \rightarrow R_4NA + MX$ (M: $NH_4$, Li, Na, K, Ag or the like)

The hydroxylation method is a method carried out by reaction as shown in (4) to (8). First, a hydroxide ($R_4NOH$) is obtained by subjecting a halide ($R_4NX$) to an ion-exchange membrane electrolysis method (reaction formula (4)), an OH-type ion-exchange resin method (reaction formula (5)), or reaction with silver oxide ($Ag_2O$) (reaction formula (6)) (a halogen to be used is chlorine, bromine, or iodine). An aimed ionic liquid ($R_4NA$) is obtained by subjecting the obtained hydroxide to reaction of reaction formulas (7) and (8) similarly to those in the halogenation method.

[Formula 7]

(4) $R_4NX + H_2O \rightarrow R_4NOH + 1/2H_2 + 1/2X_2$ (X: Cl, Br, I)
(5) $R_4NX$ + P-OH $\rightarrow R_4NOH$ + P-X (P-OH: OH type ion exchange resin)
(6) $R_4NX + 1/2Ag_2O + 1/2H_2O \rightarrow R_4NOH + AgX$
(7) $R_4NOH + HA \rightarrow R_4NA + H_2O$
(8) $R_4NOH + MA \rightarrow R_4NA + MOH$ (M: $NH_4$, Li, Na, K, Ag or the like)

The acid esterification method is a method carried out by reaction as shown in (9) to (11). First, an acid ester is obtained by allowing a tertiary amine ($R_3N$) to react with an acid ester (reaction formula (9), an acid ester to be used is an ester of an inorganic acid such as sulfuric acid, sulfurous acid, phosphoric acid, phosphorous acid, or carbonic acid; or an ester of an organic acid such as methanesulfonic acid, methylphosphonic acid, or formic acid). An aimed ionic liquid ($R_4NA$) is obtained by subjecting the obtained acid ester to reaction of reaction formulas (10) and (11) similarly to those in the halogenation method. Further, it is possible to directly obtain an ionic liquid by using methyl trifluoromethanesulfonate, methyl trifluoroacetate, or the like as the acid ester.

[Formula 8]

(9) $R_3N + ROY \rightarrow R_4NOY$

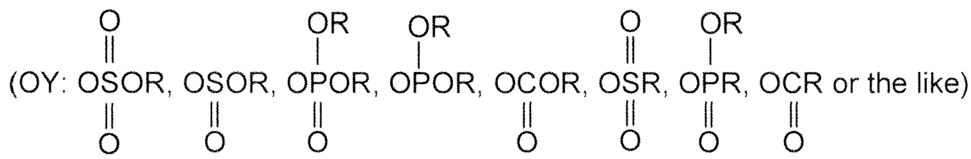

(10) $R_4NOY + HA \rightarrow R_4NA + HOY$

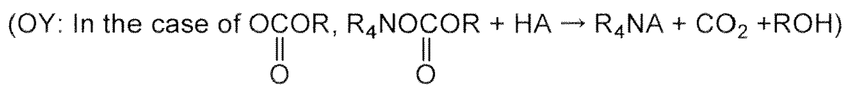

(11) $R_4NOY + MA \rightarrow R_4NA + MOY$ (M: $NH_4$, Li, Na, K, Ag or the like)

The complex forming method is a method carried out by reaction as shown in (12) to (15). First, a quaternary ammonium fluoride salt is obtained by allowing a quaternary ammonium halide ($R_4NX$), a quaternary ammonium hy-

droxide ($R_4NOH$), or a quaternary ammonium carbonic acid ester ($R_4NOCO_2CH_3$) to react with hydrofluoric acid (HF) orammoniumfluoride ($NH_4F$) (reaction formulas (12) to (14)). An ionic liquid can be obtained by subjecting the obtained quaternary ammonium fluoride salt to complex forming reaction with a fluoride such as $BF_3$, $AlF_3$, $PF_5$, $ASF_5$, $SbF_5$, $NbF_5$, or $TaF_5$, (reaction formula (15)).

[Formula 9]

(12) $R_4NX + HF \rightarrow R_4NF + HX$ (X: Cl, Br, I)
(13) $R_4NY + HF \rightarrow R_4NF + HY$ (Y: OH, $OCO_2CH_3$)
(14) $R_4NY + NH_4F \rightarrow R_4NF + NH_3 + HY$ (Y: OH, $OCO_2CH_3$)
(15) $R_4NF + MF_{n-1} \rightarrow R_4NMF_n$

($MF_{n-1}$: $BF_3$, $AlF_3$, $PF_5$, $ASF_5$, $SbF_5$, $NbF_5$, $TaF_5$ or the like)

The neutralization method is a method carried out by reaction as shown in (16). A tertiary amine can be allowed to react with an organic acid such as $HBF_4$, $HPF_6$, $CH_3COOH$, $CF_3COOH$, $CF_3SO_3H$, $(CF_3SO_2)_2NH$, $(CF_3SO_2)_3CH$, or $(C_2F_5SO_2)_2NH$ to give an ionic liquid.

[Formula 10]

(16) $R_3N + HZ \rightarrow R_3HN^+Z^-$

[HZ: Organic acid such as $HBF_4$, $HPF_6$, $CH_3COOH$, $CF_3COOH$, $CF_3SO_3H$, $(CF_3SO_2)_2NH$, $(CF_3SO_2)_3CH$, or $(C_2F_5SO_2)_2NH$]

R described in the formulas (1) to (16) represents hydrogen or a hydrocarbon group with 1 to 20 carbon atoms or is optionally a functional group a functional group formed by partially substituting the hydrocarbon group with a heteroatom.

The content of the ionic liquid is preferably 0.1 to 3 parts by weight, more preferably 0.2 to 2.8 parts by weight, furthermore preferably 0.3 to 2.6 parts by weight, and even more preferably 0.4 to 2.5 parts by weight per 100 parts by weight of the acrylic emulsion-based polymer (solid matter). If it is within the range, both the antistatic property and the low staining property are easily satisfied simultaneously and therefore, it is preferable.

Due to high ionic dissociation, the alkali metal salts are preferable in terms of exhibition of excellent antistatic capability even with a very small amount of addition. Examples of the alkali metal salts preferably used include metal salts composed of cations such as $Li^+$, $Na^+$, and $K^+$ and anions such as $Cl^-$, $Br^-$, $I^-$, $AlCl_4^-$, $Al_2Cl_7^-$, $BF_4^-$, $PF_6^-$, $SCN^-$, $ClO_4^-$, $NO_3^-$, $CH_3COO^-$, $C_9H_{19}COO^-$, $CF_3COO^-$, $C_3F_7COO^-$, $CH_3SO_3^-$, $CF_3SO_3^-$, $C_4F_9SO_3^-$, $C_2H_5OSO_3^-$, $C_6H_{13}OSO_3^-$, $C_8H_{17}OSO_3^-$, $(CF_3SO_2)_2N^-$, $(C_2F_5SO_2)_2N^-$, $(C_3F_7SO_2)_2N^-$, $(C_4F_9SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $(CF_3SO_2)(CF_3CO)N^-$, $(CH_3)_2PO4^-$, $(C_2H_5)_2PO_4^-$, $CH_3(OC_2H_4)_2OSO_3^-$, $C_6H_4(CH_3)SO_3^-$, $(C_2F_5)_3PF_3^-$, $CH_3CH(OH)COO^-$, and $(FSO_2)_2N^-$. More preferably used are lithium salts such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$, $Li(FSO_2)_2N$, $Li(CF_3SO_2)_3C$, and further preferably used are $LiCF_3SO_3$, $L_i(CF_3SO_2)_2N$, $Li(C_2F_5SO_2)_2N$, $Li(C_3F_7SO_2)_2N$, $Li(C_4F_9SO_2)_2N$, $Li(FSO_2)_2N$, and $Li(CF_3SO_2)_3C$. These alkali metal salts may be used alone or in combination of two or more thereof.

The content of the alkali metal salt is preferably 3.0 parts by weight or less, more preferably 2.0 parts by weight or less, and most preferably 0.1 to 1.0 part by weight per 100 parts by weight of the acrylic emulsion-based polymer (solid matter). If it is within the range, both the antistatic property and the low staining property are easily satisfied simultaneously and therefore, it is preferable.

[Ether-containing polysiloxane]

The re-peelable water dispersion type acryl-based pressure-sensitive adhesive composition may further contain a hydrophilic polyether-modified polysiloxane as an antistatic agent. Additionoftheether-containingpolysiloxane (alkylene oxide-containing polysiloxane) can exhibit a more excellent antistatic property. The mechanism for exhibiting the antistatic property is not made clear in detail; however, an ether group has high affinity with water in the air and therefore, the electric charge is easily transferred to the air and further, an ether group is highly flexible in the molecular motion, and the electric charge generated at the time of peeling off can be efficiently transferred to the air and therefore, it is supposed that the excellent antistatic property is exhibited. In addition, since a silicone (polysiloxane) skeleton has a high interfacial

adsorption property even for a small amount owing to the low surface tension, a trace amount can be transferred evenly to the surface of an adherend (an object to be protected) at the time when the pressure-sensitive adhesive sheet is peeled off from the adherend and the electric charge generated at the surface of the adherend can be efficiently transferred to the air and therefore, the excellent antistatic property can be exhibited.

The ether-containing polysiloxane (alkylene oxide-containing polysiloxane) is preferably composed of (contains) an ethylene oxide (EO) group. It is also possible to contain a propylene oxide (PO) group as the alkylene oxide group other than the EO group and in this case, the content by mole of the PO is preferably 50% or lower per 100% by mole of the EO and the PO in total. If the polysiloxane is composed of the EO group (contains the EO group as a constituent component), a more excellent antistatic property for peeling off can be provided and therefore, it is a preferable aspect.

The ether-containing polysiloxane (simply may be referred to as polysiloxane) has an HLB (Hydrophile-Lipophile-Balance) value of preferably 4 to 12, more preferably 5 to 11, and particularly preferably 6 to 10. If the HLB value is within the above range, not only the antistatic property can be provided but also the staining property for an adherend is made better and therefore, it is a preferable aspect.

Examples of specifically commercialized products as the polysiloxane include KF-352A, KF-353, KF-615, KF-6012, KF-351A, KF-353, KF-945, KF-6011, KF-889, and KF-6004 (all manufactured by Shin-Etsu Chemical Co., Ltd.), FZ-2122, FZ-2164, FZ-7001, SH8400, SH8700, SF8410, SF8422 (all manufactured by Dow Corning Toray Co., Ltd.), TSF-4440, TSF-4445, TSF-4452, TSF-4460 (manufactured by Momentive Performance Materials Inc.), BYK-333, BYK-377, BYK-UV3500, andBYK-UV3570 (manufactured by BYK Japan K.K.), and the like. These compounds may be used alone or in combination of two or more thereof.

Among the polysiloxanes, particularly those represented by the following formula are preferable aspects since they easily exhibit an antistatic property.

[Formula 11]

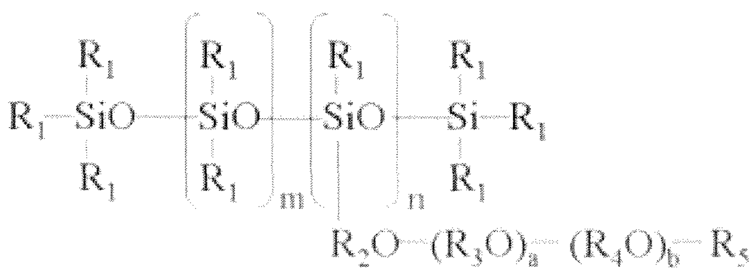

(wherein, $R_1$ represents a monovalent organic group; $R_2$, $R_3$, and $R_4$ represents an alkylene group; $R_5$ represents a hydroxyl or organic group; m and n represent an integer of 0 to 1000; provided that m and n do not simultaneously represent 0; a and b represent an integer of 0 to 100; provided that a and b do not simultaneously represent 0).

It is more preferable that in the polysiloxane, the terminal of the polyoxyalkylene (polyether) side chain is a hydroxyl group. Use of the polysiloxane can exhibit the antistatic property for an adherend (an object to be protected) and is therefore effective.

Regarding the above polysiloxane, specifically, $R_1$ in the formula may be a monovalent organic group, e.g., an alkyl group such as a methyl group, an ethyl group, or a propyl group; an aryl group such as a phenyl group or a tolyl group; or an aralkyl group such as a benzyl group or a phenethyl group, and may have a substituent group such as a hydroxyl group. Each of $R_2$, $R_3$, and $R_4$ may be an alkylene group with 1 to 8 carbon atoms such as a methylene group, an ethylene group, or a propylene group. Herein, $R_3$ and $R_4$ independently represent a different alkylene group and $R_2$ may be the same as or different from $R_3$ or $R_4$. One of $R_3$ and $R_4$ is preferably an ethylene or propylene group in order to increase the concentration of an antistatic agent soluble in its polyoxyalkylene (polyether) side chain. $R_5$ may be a monovalent organic group, e.g., an alkyl group such as a methyl group, an ethyl group, or a propyl group; or an acyl group such as an acetyl group and a propionyl group, and may have a substituent group such as a hydroxyl group. These compounds may be used alone or in combination of two or more thereof. The polysiloxane may also have a reactive substituent group such as a (meth)acryloyl group, an allyl group, or a hydroxyl group in the molecule. Among the polysiloxanes having a polyoxyalkylene (polyether) side chain, the polysiloxanes havingapolyoxyalkylene (polyether) sidechainhavingahydroxyl terminal are preferable since they are supposed to make it easy to give good balance of compatibility.

It is preferable that in the pressure-sensitive adhesive sheet of the present invention, the water dispersion type acryl-based pressure-sensitive adhesive composition contains the polysiloxane in an amount of 0.1 to 3 parts by weight and more preferably 0.12 to 2 parts by weight per 100 parts by weight of the acrylic emulsion-based polymer (solid matter). If it is within the range, the antistatic property can be easily obtained and therefore, it is preferable.

[Water dispersion type acryl-based pressure-sensitive adhesive composition]

The water dispersion type acryl-based pressure-sensitive adhesivecomposition(pressure-sensitiveadhesivecomposition) may contain various kinds of other additives if necessary. Examples of the various kinds of additives include a pigment, a filler, a leveling agent, a dispersant, a plasticizer, a stabilizer, an antioxidant, an ultraviolet absorber, an ultraviolet stabilizer, an aging prevention agent, a preserver, and the like.

In the pressure-sensitive adhesive composition, "water dispersion type" means to be dispersible in an aqueous medium, that is, a pressure-sensitive adhesive composition which can be dispersed in an aqueous medium. The aqueous medium is a medium (dispersant) containing water as an indispensable component, and may include water alone and also a mixture of water and a water-soluble organic solvent. The pressure-sensitive adhesive composition may be a dispersion using the aqueous medium or the like.

The mixing method for the pressure-sensitive adhesive compos it ion to be employed may be a conventionally-known emulsion mixingmethod, and for example, without any particular limitation, stirring using a stirrer is preferable. The stirring conditions are not particularly limited; however, for example, the stirring temperature is preferably 10 to 50°C and more preferably 20 to 35°C. The stirring time is preferably 5 to 30 minutes and more preferably 10 to 20 minutes. The stirring rotation rate is preferably 10 to 3000 rpm and more preferably 30 to 1000 rpm.

[Method for producing pressure-sensitive adhesive layer (pressure-sensitive adhesive sheet)]

The pressure-sensitive adhesive layer (pressure-sensitive adhesive sheet) of the present invention can be formed by using the water dispersion type acryl-based pressure-sensitive adhesive composition. A method of forming the pressure-sensitive adhesive layer is not particularly limited and a conventionally-known method of forming a pressure-sensitive adhesive layer can be employed. The pressure-sensitive adhesive layer can be formed by applying the pressure-sensitive adhesive composition onto a substrate or a peeling film (peeling liner) and thereafter drying the pressure-sensitive adhesive composition. If the pressure-sensitive adhesive layer is formed on a peeling (release) film, the pressure-sensitive adhesive layer may be stuck to a substrate and then transferred, followed by formation.

In the case of forming the pressure-sensitive adhesive layer (pressure-sensitive adhesive sheet), the temperature at the time of drying is usually about 80 to 170°C and preferably 80 to 160°C, and the drying time is about 0.5 to 30 minutes and preferably 1 to 10 minutes. Further, aging is carried out at room temperature to about 50°C for 1 day to 1 weak to produce the pressure-sensitive adhesive layer (pressure-sensitive adhesive sheet).

Various kinds of methods are employed for the step of applying the pressure-sensitive adhesive composition. Specific examples of the methods include roll coating, kiss roll coating, gravure coating, reverse coating, roll brush, spray coating, dip roll coating, bar coating, knife coating, air knife coating, curtain coating, lip coating, extrusion coating by a die coater, and the like.

The application amount thereof is controlled such that a pressure-sensitive adhesive layer to be formed has a prescribed thickness (thickness after drying) in the application step. The thickness of the pressure-sensitive adhesive layer (thickness after drying) is usually set in a range of about 1 to 100 $\mu$m, preferably 5 to 50 $\mu$m, and more preferably 10 to 40 $\mu$m.

Examples of a material constituting the peeling film include plastic films such as films of polyethylene, polypropylene, polyethylene terephthalate, and polyester; porous materials such as paper, cloth, and nonwoven fabric; nets, foamed sheets, metal foils, and proper thin sheet bodies such as their laminates. In terms of excellent surface smoothness, plastic films are used preferably.

The plastic films are not particularly limited as long as they are films capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film, and the like.

The thickness of the peeling film is usually 5 to 200 $\mu$m and preferably about 5 to 100 $\mu$m.

If necessary, the peeling film may be subjected to release and stain-resistant treatment by a silicone-based, fluorine-based, long chain alkyl-based, or fatty acid amide-based release agent, a silica powder and the like, and to antistatic treatment by application type, kneading type, and vapor deposition type treatment. Particularly, the peeling properties from the pressure-sensitive adhesive layer can be more improved by properly carrying out peeling (release) treatment such as silicone treatment, long chain alkyl treatment, and fluorine treatment for the surface of the peeling film.

In the case where the pressure-sensitive adhesive layer is exposed, the pressure-sensitive adhesive layer may be protected with a peeling film until it is practically used. The peeling film may be used as it is as a separator for a pressure-sensitive adhesive type optical film, and simplification in the steps can be achieved.

In the present invention, formation of the pressure-sensitive adhesive layer (pressure-sensitive adhesive layer formed of the pressure-sensitive adhesive composition of the present invention) on at least one surface of a substrate (referred to as "support" or "supporting substrate") can give a pressure-sensitive adhesive sheet (pressure-sensitive

adhesive sheet stuck to a substrate; pressure-sensitive adhesive sheet having the pressure-sensitive adhesive layer on at least one surface side of a substrate). The pressure-sensitive adhesive layer can be used as it is as a pressure-sensitive adhesive sheet without a substrate. Hereinafter, the pressure-sensitive adhesive sheet stuck to a substrate may be referred to as "pressure-sensitive adhesive sheet of the present invention".

The pressure-sensitive adhesive sheet (the pressure-sensitive adhesive sheet stuck to a substrate) of the present invention is obtained by, for example, applying the pressure-sensitive adhesive composition onto at least one surface side of a substrate, and if necessary, drying the pressure-sensitive adhesive composition to form a pressure-sensitive adhesive layer on at least one surface side of the substrate (direct printing method). Crosslinking may be carried out by dehydration in the drying step, heating the pressure-sensitive adhesive sheet after drying, or the like. The pressure-sensitive adhesive sheet can be also obtained by forming a pressure-sensitive adhesive layer on a peeling film once and transferring the pressure-sensitive adhesive layer onto the substrate (transfer method). Although the method is not particularly limited, the pressure-sensitive adhesive layer is preferably formed by so-called direct printing method of directly applying the pressure-sensitive adhesive composition onto the substrate surface. Since the pressure-sensitive adhesive layer has a high content of solvent-insoluble components, it may not be possible to obtain a sufficient anchor property (adhesion) to a support by the transfer method.

The substrate for the pressure-sensitive adhesive sheet of the present invention is preferably a plastic substrate (e.g. , a plastic film or a plastic sheet) from the viewpoint of obtaining a pressure-sensitive adhesive sheet with high transparency. Examples of a material for the plastic substrate include, but are not particularly limited to, transparent resins, e.g., polyolefins (polyolefin-based resins) such as polypropylene and polyethylene; polyesters (polyester-based resins) such as polyethylene terephthalate (PET) ; polycarbonates, polyamides, polyimides, acryl, polystyrenes, acetates, polyether sulfones, triacetyl cellulose, and the like. These resins may be used alone or in combination of two or more thereof. Among these substrates, although not particularly limited to, polyester-based resins and polyolefin-based resins are preferably used and PET, polypropylene, and polyethylene are more preferably used in terms of productivity and formability. That is, as the substrate, polyester-based films and polyolefin-based films are preferable and a PET film, a polypropylene film, and a polyethylene film are more preferable. Examples of the polypropylene include, but are not particularly limited to, a homo-type, which is a homopolymer; a random type, which is an α-olefin random copolymer; and a block type, which is an α-olefin block copolymer. Examples of the polyethylene include low density polyethylene (LDPE), high density polyethylene (HDPE), and linear low density polyethylene (L-LDPE). These plastics may be used alone or in combination of two or more thereof.

The thickness of the substrate is not particularly limited, but is preferably 10 to 150 μm and more preferably 30 to 100 μm.

For the purpose of improving the adhesive strength to the pressure-sensitive adhesive layer, the surface of the substrate on the side where the pressure-sensitive adhesive layer is to be formed is preferably subjected to easy adhesion treatment such as acid treatment, alkali treatment, primer treatment, corona treatment, plasma treatment, or ultraviolet treatment. An intermediate layer may be formed between the substrate and the pressure-sensitive adhesive layer. The thickness of the intermediate layer is preferably, for example, 0.01 to 1 μm and more preferably 0.1 to 1 μm.

The pressure-sensitive adhesive sheet of the present invention may be formed into a rolled body, and may be wound into a roll in the state where the pressure-sensitive adhesive layer is protected by a peeling film (separator).

The pressure-sensitive adhesive sheet of the present invention preferably has a substrate and an antistatic layer and/or a stain-resistant layer on at least one surface side of the substrate. The rear surface of the pressure-sensitive adhesive sheet (surface on the side opposite to the side where the pressure-sensitive adhesive layer is formed) may be subjected to antistatic treatment and/or stain-resistant treatment to form a rear surface treatment layer (antistatic layer, stain-resistant (treatment) layer, or the like). The pressure-sensitive adhesive sheet of the present invention is particularly preferable to have a configuration of a pressure-sensitive adhesive layer/substrate/rear surface treatment layer (antistatic layer and/or stain-resistant layer). Further, a substantially monolayer having the antistatic function and the stain-resistant function may also be employed.

The antistatic treatment may be a common antistatic treatment method, and examples thereof include, but are not particularly limited to, a method for forming an antistatic layer on the substrate rear surface (surface on the side opposite to the side where the pressure-sensitive adhesive layer is formed) and a method for kneading a kneading type antistatic agent in the substrate.

Examples of a method for forming an antistatic layer include a method of applying an antistatic agent, or an antistatic resin containing an antistatic agent and a resin component, or a conductive resin composition or conductive polymer containing a conductive substance and a resin component; a method for depositing a conductive substance or plating with a conductive substance; and the like.

Examples of the antistatic agent include cationic antistatic agents having a cationic functional group such as a quaternary ammonium salt and a pyridinium salt (e.g. , primary amino group, secondary amino group, and tertiary amino group); anionic antistatic agents having an anionic functional group such as a sulfonic acid salt, a sulfuric acid ester salt, a phosphonic acid salt, and a phosphoric acid ester salt; amphoteric ionic antistatic agent such as alkylbetain

and its derivatives, imidazoline and its derivatives, and alanine and its derivatives; nonionic antistatic agents such as amino alcohol and its derivatives, glycerin and its derivatives, and polyethylene glycol and its derivatives; and further ion conductive polymers obtained by polymerization or copolymerization of monomers having ion conductive groups shown in the cationic antistatic agents, anionic antistatic agents, and amphoteric antistatic agents.

Specifically, examples of the cationic antistatic agents include (meth)acrylate copolymers having a quaternary ammonium group such as an alkyltrimethylammonium salt, acyloyl amidopropyl trimethylammonium methosulfate, an alkylbenzylmethylammonium salt, acyl choline chloride, and polydimethylaminoethyl methacrylate; styrene-based copolymers having a quaternary ammonium group such as polyvinylbenzyltrimethylammonium chloride; diallylamine copolymers having a quaternary ammonium group such as polydiallyldimethylammonium chloride; and the like. Examples of the anionic antistatic agents include an alkylsulfonic acid salt, an alkylbenzenesulfonic acid salt, an alkylsulfuric acid ester salt, an alkylethoxysulfuric acid ester salt, an alkylphosphoric acid ester salt, a sulfonic acid-containing styrene-based copolymer, and the like. Examples of the amphoteric ionic antistatic agents include an alkylbetain, an alkylimidazolium betain, a carbobetain graft copolymer, and the like. Examples of the nonionic antistatic agents include fatty acid alkylolamide, di-(2-hydroxyethyl)alkylamine, polyoxyethylene alkylamine, a fatty acid glycerin ester, a polyoxyethylene glycol fatty acid ester, a sorbitan fatty acid ester, a polyoxysorbitan fatty acid ester, polyoxyethylene alkylphenyl ether, polyoxyethylene alkyl ether, polyethylene glycol, polyoxyethylene diamine, a copolymer composed of a polyether and a polyester, methoxypolyethylene glycol (meth)acrylate, and the like.

Examples of the conductive polymer include polyaniline, polypyrrole, polythiophene, and the like.

Examples of the conductive substance include tin oxide, antimony oxide, indium oxide, cadmium oxide, titanium oxide, zincoxide, indium, tin, antimony, gold, silver, copper, aluminum, nickel, chromium, titanium, iron, cobalt, copper iodide, and alloys and mixtures thereof, and the like.

Examples of the resin component include popular resins such as polyester, acrylic, polyvinyl, urethane, melamine, and epoxy resins. In the case where the antistatic agent is a polymer type antistatic agent, the antistatic resin may not contain the above-mentioned resin component. The antistatic resin may also contain, as a crosslinking agent, a methylolated or alkylolated melamine-based, urea-based, glyoxal-based, and acrylamide-based compound, an epoxy-based compound, and an isocyanate-based compound.

An example of the method for forming the antistatic layer by application includes a method for diluting the above antistatic resin, conductive polymer, and conductive resin composition with a medium or dispersant such as an organic solvent or water and applying the obtained coating solution to a substrate, followed by drying. Examples of the organic solvent include methyl ethyl ketone, acetone, ethyl acetate, tetrahydrofuran, dioxane, cyclohexanone, n-hexane, toluene, xylene, methanol, ethanol, n-propanol, isopropanol, and the like. These solvents may be used alone or in combination of two or more thereof. As the application method, conventionally known application methods are employed and specific examples thereof include roll coating, gravure coating, reverse coating, roll brush, spray coating, air knife coating, immersion and curtain coating methods.

The thickness of the antistatic layer (antistatic resin layer, conductive polymer layer, and conductive resin composition layer) formed by application is preferably 0.001 to 5 μm and more preferably 0.005 to 1 μm.

Examples of a method for vapor depositing the conductive substance or plating with the conductive substance include vacuum vapor deposition, sputtering, ion plating, chemical vapor deposition, spray heat decomposition, chemical plating, electroplating methods, and the like.

The thickness of the antistatic layer (conductive substance layer) formed by the vapor deposition or plating is preferably 20 to 10000 angstroms (0.002 to 1 μm) and more preferably 50 to 5000 angstroms (0.005 to 0.5 μm).

As the kneading type antistatic agent, the antistatic agents may be used properly. The blend amount of the kneading type antistatic agent is preferably 20% by weight or lower, and more preferably 0.05 to 10% by weight per total weight (100% by weight) of the substrate. A kneading method is not particularly limited as long as the method can evenly mix the kneading type antistatic agent with a resin to be used for, for example, a plastic substrate and generally, examples thereof include methods using a heating roll, a Banbury mixer, a pressure kneader, a biaxial kneader, and the like.

Example of a method for forming the stain-resistant layer include a method for applying a resin containing an ant i-staining component (stain-resistant resin), and the like.

Examples of the stain-resistant resin include aminoalkyd resins, long chain alkyl-containing compounds, silicone-containing organic resin copolymers, and the like.

An example of the method for forming a stain-resistant layer by application includes a method for diluting the stain-resistant resin with a medium or dispersant such as an organic solvent or water and applying the obtained coating solution to a substrate, followed by drying. Examples of the organic solvent include methyl ethyl ketone, acetone, ethyl acetate, tetrahydrofuran, dioxane, cyclohexanone, n-hexane, toluene, xylene, methanol, ethanol, n-propanol, isopropanol, and the like. These solvents may be used alone or in combination of two or more thereof. As the application method, conventionally known application methods are employed and specific examples thereof include roll coating, gravure coating, reverse coating, roll brush, spray coating, air knife coating, immersion and curtain coating methods.

The thickness of the stain-resistant layer is preferably 0.001 to 5 μm and more preferably 0.005 to 1 μm.

Further, the rear surface of the pressure-sensitive adhesive sheet may be subjected to release treatment with a silicone-based, fluorine-based, long chain alkyl-based or fatty acid amide-based release agent or the like to form a rear surface treatment layer (release treatment layer).

The pressure-sensitive adhesive sheet of the present invention has a peeling power ratio ((B)/(A)) of a peeling power (B) for an adherend surface (rough adherend surface) with a surface roughness Ra of 250 to 450 μm and low polarity to a peeling power (A) for an adherend surface (smooth adherend surf ace) with a surface roughness Ra of 5 to 50 μm and high polarity measured at a peeling speed of 30 m/minute and a peeling angle of 180° in a range of 0.7 to 1.5, preferably 0.8 to 1.3, and more preferably 0.9 to 1.2. If the ratio is within the range, the pressure-sensitive adhesive sheet is easily peeled off and productivity and handling property are improved in the product ion process of polarizing plate or liquid crystal display device and therefore, it is preferable. Specific examples of the adherend surface (smooth adherend surface) with a surface roughness Ra of 5 to 50 μm and high polarity include a polarizing plate (trade name: "SEG1425DU", manufactured by NITTO DENKO CORPORATION, surf ace roughness Ra: 12 μm) and the like. Specific examples of the adherend surface (rough adherend surface) with a surface roughness Ra of 250 to 450 μm and low polarity include a polarizing plate (trade name: "T-SIG1423DUAGS2B", manufactured by NITTO DENKO CORPORATION, surface roughness Ra: 356 μm, and trade name: "SEG1423DUAGS1", manufactured by NITTO DENKO CORPORATION, surface roughness Ra: 400.7 μm) and the like. The adherend surface with high polarity means an adherend surface such as triacetyl cellulose surface with 30 to 50° of an angle (water contact angle) formed between the adhesive surface and a tangent line of the end part of a droplet which is formed by dropping about 1.9 μL of distilled water in an atmosphere of 23°C x 50% RH at a time of 1 second after the dropping of the droplet; and the adherend surface with low polarity means an adherend surface such as hard coat surface containing silica particles or a polymer with 55 to 80° of a water contact angle measured in the above-mentioned conditions.

The pressure-sensitive adhesive sheet of the present invention has an adhesion to the adherend surface with low polarity (rough adherend surface) of 99.0% or higher, preferably 99.2% or higher, and more preferably 99.3% or higher. If the adhesion is adjusted to 99.0% or higher, separation or peeling of the pressure-sensitive adhesive sheet (surface protecting film) stuck to an adherend can be suppressed in the production process, and in the case where the pressure-sensitive adhesive sheet is used for surface protection, it can sufficiently exhibit the protection function and therefore, it is a preferable aspect.

In order to make the adhesion high, it is not particularly limited but, for example, it can be achieved by adjusting the blend amount of a crosslinking agent (water-insoluble crosslinking agent). Specifically, addition of a large amount of a crosslinking agent to a base polymer (acrylic emulsion-based polymer) to be used for the pressure-sensitive adhesive can make the gel ratio high, on the other hand, decrease of the addition amount of a crosslinking agent can make the gel ratio low. In the present invention, in order to increase the adhesion to the adherend surface with low polarity (rough adherend surface), the gel ratio may be lowered and the adherend surface of the pressure-sensitive adhesive layer may be allowed to follow the rough surface (coarse surface). However, in this case, unreacted monomer components (e.g. , acrylic acid) are left and interaction of the adherend surface and the unreacted monomer components tends to cause heavy-peeling and it results in failure of obtaining a re-peelable property.

Specifically, in order to adjust the adhesion to 99.0% or higher, the blend amount of the crosslinking agent is adjusted in a manner of adding less than equimolar amount (including no addition) of the crosslinking agent to the number of moles of crosslinking points and thus, the gel ratio of the pressure-sensitive adhesive (layer) can be lowered and the adhesion can be satisfied. However, in this case, since interaction of the crosslinking points owing to the unreacted monomer components and the adherend having polarity is generated and tends to cause heavy-peeling, the blend amount of the crosslinking agent is preferably 1.1 to 2.4 parts by weight, more preferably 1.2 to 2.3 parts by weight, and particularly preferably 1.5 to 2 parts by weight for suppressing the heavy peeling and satisfying the high adhesion.

In order to make the adhesion high, it is not particularly limited but, for example, it can be achieved by adjusting the blend amount of a polymerization initiator or adding a chain transfer agent. Specifically, addition of a large amount of a polymerization initiator to a base polymer (acrylic emulsion-based polymer) to be used for the pressure-sensitive adhesive can make the gel ratio low. Alternatively, addition of a chain transfer agent to a base polymer (acrylic emulsion-based polymer) to be used for the pressure-sensitive adhesive can make the gel ratio low.

The pressure-sensitive adhesive sheet of the present invention has an initial peeling electrification voltage (absolute value) of 1.0 kV or lower and preferably 0.9 kV or lower. If the initial peeling electrification voltage (absolute value) exceeds 1.0 kV, the arrangement of polarizers in a polarizing plate, which is an adherend, is disordered and therefore, it is not preferable.

The pressure-sensitive adhesive sheet of the present invention is preferably a surface protecting film for an optical member. The pressure-sensitive adhesive sheet is excellent in antistatic property, adherability (tackiness, adhesion, re-peelable property, etc.) and the like, and does not contain bubbles between the pressure-sensitive adhesive layer (pressure-sensitive adhesive sheet) and the surface of an adherend at the time of being stuck and therefore, no inspection error or the like is caused at the time of appearance inspection or the like, and electrification of the surface of the adherend is prevented at the time of peeling off the pressure-sensitive adhesive sheet from the adherend, and

the pressure-sensitive adhesive sheet can be used by sticking it to an optical member, which is weak in static electricity generation, for surface protection and thus, it is useful.

The pressure-sensitive adhesive layer (pressure-sensitive adhesive sheet) is excellent in antistatic property and adherability (tackiness, adhesion, re-peelable property, etc.) and can also be used for pressure-sensitive adhesive sheets and pressure sensitive tapes for re-peeling, surface protecting films, and the like. For example, the pressure-sensitive adhesive sheet is preferably used for re-peeling [e.g., masking tapes such as a masking tape for construction aging, a masking tape for automotive coating, a masking tape for electronic parts (lead frame, printed board, etc.), and a masking tape for sand blast; surface protecting films such as a surface protecting film for aluminum sashes, a surface protecting film for optical plastics, a surface protecting film for optical glass, a surface protecting film for automotive protection, and a surface protecting film for metal plates; pressure-sensitive adhesive tapes for semiconductor/electronic part production processes such as a background tape, a tape for pellicle fixation, a tape for dicing, a tape for lead frame fixation, a cleaning tape, a dust removal tape, a carrier tape, and a cover tape; wrapping tapes for electronic appliances and electronic parts; temporary fixation tapes for transportation, bundling tapes; and labels], and the like.

The pressure-sensitive adhesive layer (pressure-sensitive adhesive sheet) is also preferably used for surface protection (surface protecting films for optical members, etc.) of optical members (optical plastics, optical glass, optical films, etc.) such as polarizing plates, retardation plates, anti-reflection plates, wave plates, optical compensation films, and brightness improvement films constituting panels such as liquid crystal displays, organic electroluminescence (organic EL), and field emission displays. However, use of the pressure-sensitive adhesive sheet is not limited thereto and the sheet may be used for surface protection and breakage prevention at the time of producing finely processed parts such as semiconductors, circuits, various kinds of printed circuit boards, various kinds of masks, and lead frames, or for removing foreign matters, etc., or masking, or the like.

Examples

Hereinafter, the present invention will be described in detail based on Examples; however, the invention should not be limited to these Examples. In the following description, "part(s)" and "%" are on the basis of weight unless otherwise specified.

<Example 1>

(Preparation of acrylic emulsion-based polymer)

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), and 3 parts by weight of a reactive nonionic anionic emulsifier (trade name; "Aqualon HS-1025", manufactured by DAI-ICHI KOGYO SEIYAKU CO., LTD.), and thereafter the components were stirred and mixed by a homomixer to obtain a monomer emulsion.

A reaction container equipped with a condenser, a nitrogen gas introduction tube, a thermometer, and a stirrer was then added with 50 parts by weight of water, 0.01 parts by weight of a polymerization initiator (ammonium persulfate), and the monomer emulsion in an amount equivalent to 10% by weight and, under stirring conditions, emulsion polymerization was performed at 65°C for 1 hour. Thereafter, 0.05 parts by weight of the polymerization initiator (ammonium persulfate) was further added and successively, under stirring conditions, the remaining of the monomer emulsion (amount equivalent to 90% by weight) was added over 3 hours and then allowed to react at 75°C for 3 hours. Next, the reaction product was cooled to 30°C and added with ammonia water with 10% by weight concentration to adjust pH to 8 to obtain a water dispersion of an acrylic emulsion-based polymer (concentration of acrylic emulsion-based polymer: 42% by weight).

(Preparation of water dispersion type acryl-based pressure-sensitive adhesive composition)

The water dispersion of the acrylic emulsion-based polymer was mixed with 2.0 parts by weight of an epoxy-based crosslinking agent, which is a water-insoluble crosslinking agent [tradename: "TETRAD-C"; manufactured by MITSUBISHI GAS CHEMICAL COMPANY, INC., 1,3-bis(N,N-diglycidylaminomethyl)cyclohexane; epoxy equivalent: 110; and number of functional groups: 4], 1 part by weight of 1-ethyl-3-methylimidazolium bisfluorosulfonylimide [trade name "AS-110, manufactured by DAI-ICHI KOGYO SEIYAKU CO., LTD.,; efficacious component 100% by weight), and 0.15 parts by weight of an ether-containing polysiloxane [trade name "KF-353", manufactured by Shin-Etsu Chemical Co. , Ltd.; efficacious component 100% by weight), per 100 parts by weight of the acrylic emulsion-based polymer (solid matter) while stirring with a stirrer under stirring conditions of 23°C and 300 rpm for 10 minutes, to prepare a water dispersion type acryl-based pressure-sensitive adhesive composition.

(Formation of pressure-sensitive adhesive layer and production of pressure-sensitive adhesive sheet)

The water dispersion type acryl-based pressure-sensitive adhesive composition was applied (coated) onto a surface of a PET film (trade name: "T100M38", manufactured by Mitsubishi Plastics Inc. ; thickness: 38 μm), which was subjected to corona treatment, using an applicator manufactured by TESTER SANGYO CO., LTD. so as to have a thickness of 15 μm after drying, and then dried at 120°C for 2 minutes in a hot air circulation type oven and successively aged at room temperature for 1 week to obtain a pressure-sensitive adhesive sheet.

<Examples 2 and 3 and Comparative Examples 1 to 3>

As shown in Table 1, monomer emulsions were prepared in the same manner as in Example 1 by changing the raw material monomers, the blend amounts and the like. Additives not described in the Table were added in the same amounts as those in Example 1. Water dispersion type acryl-based pressure-sensitive adhesive compositions (pressure-sensitive adhesive compositions) and pressure-sensitive adhesive sheets were produced in the same manner as in Example 1 by using the monomer emulsions. In addition, two-step polymerization in which a polymerization initiator was added separately two times was employed for Examples 1 to 3 and Comparative Examples 1 to 3 and entire dropping polymerization in which a polymerization initiator is dropped all at a time was employed for Examples 4 to 6.

<Example 4>

(Preparation of acrylic emulsion-based polymer)

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), and 3 parts by weight of a reactive nonionic anionic emulsifier (trade name; "Aqualon HS-1025", manufactured by DAI-ICHI KOGYO SEIYAKU CO., LTD.), and thereafter the components were stirred and mixed by a homomixer to obtain a monomer emulsion.

A reaction container equipped with a condenser, a nitrogen gas introduction tube, a thermometer, and a stirrer was then added with 50 parts by weight of water and 0.3 parts by weight of a polymerization initiator (ammonium persulfate), and heated to 75°C, and thereafter the above monomer emulsion was added over 3 hours under stirring conditions and further reaction was carried out at 75°C for 3 hours. Next, the reaction system was cooled to 30°C and added with ammonia water with 10% by weight concentration to adjust pH to 8 to prepare a water dispersion of an acrylic emulsion-based polymer (concentration of acrylic emulsion-based polymer: 42% by weight).

A water dispersion type acryl-based pressure-sensitive adhesive composition(pressure-sensitive adhesive composition) and a pressure-sensitive adhesive sheet were produced in the same manner as in Example 1 by changing the blend amounts and the like as for the other respects as shown in Table 1. Additives not described in the Table were added in the same amounts as those in Example 1.

<Example 5>

A monomer emulsion was prepared in the same manner as in Example 4 except that the raw material monomers, the blend amounts and the like were changed as shown in Table 1, and the amount of the polymerization initiator was changed to 0.15 pats by weight. Additives not described in the Table were added in the same amounts as those in Example 1. A water dispersion type acryl-based pressure-sensitive adhesive composition (pressure-sensitive adhesive composition) and a pressure-sensitive adhesive sheet were obtained in the same manner as in Example 1 using the monomer emulsion.

<Example 6>

(Preparation of acrylic emulsion-based polymer)

A container was loaded with 90 parts by weight of water and, as shown in Table 1, 92 parts by weight of 2-ethylhexyl acrylate (2EHA), 4 parts by weight of acrylic acid (AA), 4 parts by weight of methyl methacrylate (MMA), 2 parts by weight of a reactive nonionic anionic emulsifier (trade name; "Aqualon HS-1025", manufactured by DAI-ICHI KOGYO SEIYAKU CO., LTD.), and 0.05 parts by weight of a chain transfer agent (n-lauryl mercaptan) and thereafter the components were stirred and mixed by a homomixer to prepare a monomer emulsion.

A reaction container equipped with a condenser, a nitrogen gas introduction tube, a thermometer, and a stirrer was then added with 50 parts by weight of water and 0.7 parts by weight of a polymerization initiator (ammonium

persulfate), and heated to 75°C, and thereafter the above monomer emulsion was added over 3 hours under stirring conditions and further reaction was carried out at 75°C for 3 hours. Next, the reaction system was cooled to 30°C and added with ammonia water with 10% by weight concentration to adjust pH to 8 to prepare a water dispersion of an acrylic emulsion-based polymer (concentration of acrylic emulsion-based polymer: 42% by weight).

A water dispersion type acryl-based pressure-sensitive adhesive composition(pressure-sensitiveadhesivecomposition) and a pressure-sensitive adhesive sheet were produced in the same manner as in Example 1 by changing the blend amounts and the like as for the other respects as shown in Table 1. Additives not described in the Table were added in the same amounts as those in Example 1.

[Evaluation]

Each pressure-sensitive adhesive composition and each pressure-sensitive adhesive sheet obtained in the Examples and the Comparative Examples were evaluated by the following measurement methods and evaluation methods. Specific blend contents and the evaluation results were shown in Tables 1 and 2.

<Initial peeling electrification voltage>

Each produced pressure-sensitive adhesive sheet was cut into a size of 70 mm in width and 130 mm in length, and after the separator was peeled off, the pressure-sensitive adhesive sheet was pressure-bonded to the surface (to DU) of a polarizing plate (trade name: "SEG1425DU", manufactured by NITTO DENKO CORPORATION, surface roughness Ra: 12 $\mu$m), to the surface (to S2B) of a polarizing plate (trade name: "T-SIG1423DUAGS2B", manufactured by NITTO DENKO CORPORATION, surface roughness Ra: 356 $\mu$m), or to the surface (to S1) of a polarizing plate (trade name: "SEG1423DUAGS1", manufactured by NITTO DENKO CORPORATION, surface roughness Ra: 400.7 $\mu$m) each stuck to an acrylic plate (Acrylite, manufactured by MITSUBISHI RAYON CO., LTD., thickness: 1 mm; width: 70 mm; length: 100 mm), which was previously treated for static elimination, by a hand roller such that one rim part was extruded out by 30 mm. Successively, after allowed to stand in conditions of 23°C x 24 $\pm$ 2% RH for 1 day, the resulting sample was set at a prescribed position as shown in Fig. 1. The one rim part extruded by 30 mm was fixed in an automatic winder, and the pressure-sensitive adhesive sheet was peeled off at a peeling angle of 150° and a peeling speed of 30 m/minute. The potential generated in the polarizing plate surface at that time was measured as the initial peeling electrification voltage (absolute value: kV) by a potentiometer (KSD-0103, manufactured by KASUGA ELECTRIC WORKS LTD.) fixed at a prescribed position. The distance between the sample and the potentiometer was 100 mm at the time of measuring the potential in the polarizing plate surface. The measurement was carried out in conditions of 23°C x 24 $\pm$ 2% RH.

The pressure-sensitive adhesive sheet of the present invention has an initial peeling electrification voltage (absolute value) of 1.0 kV or lower and preferably 0.9 kV or lower. If the initial peeling electrification voltage (absolute value) exceeds 1.2 kV, the arrangement of polarizers in a polarizing plate, which is an adherend, is disordered and therefore, it is not preferable.

<Initial peeling power>

Each produced pressure-sensitive adhesive sheet was cut into a size of 25 mm in width and 100 mm in length and after the separator was peeled off, the pressure-sensitive adhesive sheet was laminated on the surface (on DU) of a polarizing plate (trade name: "SEG1425DU", manufactured by NITTO DENKO CORPORATION, surface roughness Ra: 12 $\mu$m), on the surface (on S2B) of a polarizing plate (trade name: "T-SIG1423DUAGS2B", manufactured by NITTO DENKO CORPORATION, surface roughness Ra: 356 $\mu$m), or on the surface (on S1) of a polarizing plate (trade name: "SEG1423DUAGS1", manufactured by NITTO DENKO CORPORATION, surface roughness Ra: 400.7 $\mu$m) by a laminating apparatus (Compact laminating apparatus, manufactured by TESTER SANGYO CO., LTD.) in conditions of 0. 25 MPa and 0.3 m/minute to obtain each evaluation sample. After the lamination, the sample was allowed to stand in conditions of 23°C x 50% RH for 30 minutes and subjected to measurement of adhesive power (N/25 mm) at the time of peeling off at a peeling angle of 180° and a peeling rate of 0.3 m/minute and 30 m/minute using a tension tester as initial peeling power. The measurement was carried out in conditions of 23°C x 50% RH.

<Water contact angle to polarizing plate surface (adherend surface)>

The water contact angle to the polarizing plate surface (adherend surface) was measured in the following conditions. First, the polarizing plate from which a protecting film not subjected to antistatic treatment was peeled off was allowed to stand still for 2 hours in conditions of 23°C x 50% RH. Thereafter, about 1.9 $\mu$L of distilled water was dropped on the polarizing plate surface and the angle (water contact angle) between the polarizing plate surface (adherend

surface) and the tangent line of the endpart of the droplet 1 second after dropping the droplet was measured. The measurement results were 36.5° (adherend surface with high polarity) for SEG1425DU, 70° (adherend surface with low polarity) for SEG1423DUAGS1, and 70° (adherend surface with low polarity) for T-SIG1423DUAGS2B.

The initial peeling power of the pressure-sensitive adhesive sheet of the present invention is preferably 0.01 to 0.25 N/25 mm and more preferably 0.02 to 0.20 N/25 mm at a peeling speed of 0.3 m/minute. If the peeling power is adjusted to 0.25 N/25 mm or lower, the pressure-sensitive adhesive sheet is easily peeled off and productivity and handling property are improved in the polarizing plate or liquid crystal display device productionprocess and therefore, it is preferable. On the other hand, if the peeling power is adjusted to 0.01 N/25 mm or more, the blistering and peeling separation of the pressure-sensitive adhesive sheet is suppressed during the production process, and the protecting function as a surface protecting pressure-sensitive adhesive sheet is sufficiently exhibited and therefore, it is preferable.

The initial peeling power of the pressure-sensitive adhesive sheet of the present invention is preferably 0.1 to 2.0 N/25 mm and more preferably 0.15 to 1.8 N/25 mm at a peeling speed of 30 m/minute. If the peeling power is adjusted to 2.0 N/25 mm or lower, the pressure-sensitive adhesive sheet is easily peeled off and productivity and handling property are improved in the polarizing plate or liquid crystal display device productionprocess and therefore, it is preferable. On the other hand, if the peeling power is adjusted to 0.1 N/25 mm or more, the blistering and peeling separation of the pressure-sensitive adhesive sheet is suppressed during the production process, and the protecting function as a surface protecting pressure-sensitive adhesive sheet is sufficiently exhibited and therefore, it is preferable.

[Peeling power ratio]

The peeling power ratio ((B)/(A)) of the pressure-sensitive adhesive sheet of the present invention (initial peeling power to S2B/initial peeling power to DU, or initial peeling power to S1/initial peeling power to DU) is 0.7 to 1.5, preferably 0.8 to 1.3, and more preferably 0.9 to 1.2. If it is apart from the range, the pressure-sensitive adhesive sheet usable for a polarizing plate needs to be selected and therefore, it is not preferable.

[Adhesion]

Each produced pressure-sensitive adhesive sheet was cut into a size of 25 mm in width and 100 mm in length and after the separator was peeled off, the pressure-sensitive adhesive sheet was laminated on the surface (on S2B) of a polarizing plate (trade name: "T-SIG1423DUAGS2B", manufactured by NITTO DENKO CORPORATION, width: 70 mm and length: 100 mm), or on the surface (on S1) of a polarizing plate (trade name: SEG1423DUAGS1, manufactured by NITTO DENKO CORPORATION, surface roughness Ra: 400.7 μm) by a laminating apparatus (Compact laminating apparatus, manufactured by TESTER SANGYO CO., LTD.) in conditions of 0. 15 MPa and 5 m/minute to obtain each evaluation sample. After the lamination, the sample was allowed to stand in conditions of 23°C x 50% RH for 30 minutes and subjected to observation and measurement by using a digital microscope (apparatus name: "VH-Z-100", manufactured by KEYENCE CORPORATION, magnification: 200 times), and in luminance extraction, the surface area of the pressure-sensitive adhesive layer of the pressure-sensitive adhesive sheet having contact with the polarizing plate, which is an adherend, and the surface area with no contact were binarized to calculate the surface are having contact by collective measurement. The adhesion ratio (%) was evaluated as the adhesion (to S2B or to S1). The measurement was carried out in conditions of 23°C × 50% RH.

[Table 1]

| Blend contents | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Acrylic emulsion-based polymer | Raw material monomer | 2EHA | 92 | 92 | 92 | 92 | 96 | 92 | 92 | 92 | 92 |
| | | AA | 4 | 4 | 4 | 4 | 4 | 4 | 4 | 4 | 4 |
| | | MMA | 4 | 4 | 4 | 4 | | 4 | 4 | 4 | 4 |
| | Reactive emulsifier | HS1025 | 3 | 3 | 3 | 3 | 3 | 3 | 3 | 3 | 3 |

(continued)

| Blend contents | | | Example | | | | | | Comparative Example | | |
|---|---|---|---|---|---|---|---|---|---|---|---|
| | | | 1 | 2 | 3 | 4 | 5 | 6 | 1 | 2 | 3 |
| Pressure-sensitive adhesive composition | Acrylic emulsion-based polymer | | 100 | 100 | 100 | 100 | 100 | 100 | 100 | 100 | 100 |
| | Water-insoluble crosslinking agent | T/C | 2.00 | 1.75 | 1.50 | 1.80 | 1.80 | 1.80 | 2.50 | 1.00 | 2.50 |
| | Ionic liquid | AS-110 | 1 | 1 | 1 | 1 | 1 | 1 | 1 | 1 | |
| | Ether-containing polysiloxane | KF-353 | 0.15 | 0.15 | 0.15 | 0.32 | 0.32 | 0.32 | 0.15 | 0.15 | |

[Table 2]

| Evaluation results | | | | Example | | | | | | Comparative Example | | |
|---|---|---|---|---|---|---|---|---|---|---|---|---|
| | | | | 1 | 2 | 3 | 4 | 5 | 6 | 1 | 2 | 3 |
| Evaluation results | Initial peeling electrification voltage (absolute value) [kV] | Peeling speed 30 m/minute | To DU | 0.1 | 0.1 | 0.4 | 0.0 | 0.0 | 0.0 | 0.0 | 0.7 | 2.6 |
| | | | To S2B | 0.4 | 0.5 | 0.9 | | | | 0.1 | 1.4 | 2.8 |
| | | | To S1 | | | | 0.0 | 0.0 | 0.0 | | | |
| | Initial peeling power [N/25 mm] | Peeling speed 0.3 m/minute | To DU | 0.04 | 0.04 | 0.04 | 0.07 | 0.05 | 0.06 | 0.03 | 0.07 | 0.11 |
| | | | To S2B | 0.05 | 0.06 | 0.07 | | | | 0.04 | 0.11 | 0.14 |
| | | | To S1 | | | | 0.05 | 0.04 | 0.05 | | | |
| | | Peeling speed 30 m/minute | To DU | 0.29 | 0.32 | 0.34 | 0.48 | 0.49 | 0.48 | 0.16 | 0.64 | 0.80 |
| | | | To S2B | 0.31 | 0.33 | 0.38 | | | | 0.25 | 0.49 | 0.42 |
| | | | To S1 | | | | 0.36 | 0.35 | 0.39 | | | |
| | Peeling power ratio (B)/(A) | Peeling speed 30 m/minute | S2B/DU or S1/DU | 1.07 | 1.03 | 1.12 | 0.75 | 0.71 | 0.81 | 1.56 | 0.77 | 0.50 |
| | Adhesion | - | To S2B | 99.6 | 99.6 | 99.6 | | | | 99.3 | 99.7 | 99.2 |
| | | - | To S1 | | | | 99.9 | 100 | 100 | | | |

The weight of solid matter was shown in the blend contents in Table 1. The abbreviations used in Table 1 are as follows.

2EHA: 2-ethylhexyl acrylate,
AA: acrylic acid,
MMA: methyl methacrylate,
HS-1025: trade name: "Aqualon HS-1025", manufactured by DAI-ICHI KOGYO SEIYAKU CO., LTD., (reactive nonionic anionic emulsifier),
T/C: trade name: "TETRAD-C", manufactured by MITSUBISHI GAS CHEMICAL COMPANY, INC., (1,3-bis(N,N-diglycidylaminomethyl)cyclohexane, epoxy equivalent: 110, number of functional groups: 4) (water-insoluble crosslinking agent),
AS-110: trade name "AS110", manufactured by DAI-ICHI KOGYO SEIYAKU CO., LTD.; 1-ethyl-3-methylimidazolium bisfluorosulfonylimide (efficacious component 100% by weight) (ionic liquid),
KF-353: trade name "KF-353", manufactured by Shin-Etsu Silicone Co., Ltd. (ether-containing polysiloxane, HLB value: 10)

According to the evaluation results shown in Table 2, it was confirmed that in all Examples, pressure-sensitive adhesive sheets excellent in antistatic property and pressure-sensitive adhesive properties (adhesion, adherability, and re-peelable property) could be obtained and that the pressure-sensitive adhesive sheets were suitable for use in optical components or the like. Particularly, it was confirmed that Examples 4 to 6 in which entire dropping polymerization was employed could produce an excellent effect on particularly antistatic property and adhesion.

On the other hand, in Comparative Examples 1 and 3, the peeling power ratio was apart from the desired range and it was confirmed that productivity and handling property were inferior. In Comparative Example 2, although an antistatic agent was blended, high peeling electrification voltage exceeding the desired range was observed for the adherend surface (rough adherend surface) with low polarity. The reason for that was not clear in detail; however it is supposed that the ionic liquid, an ionic compound, is easy to be transferred to the adherend interface owing to electric interaction in the adherend surface with high polarity as compared with the adherend surface with low polarity and easily exhibits the peeling electrification preventive property. Further, the peeling electrification voltage is generated as potential difference owing to transfer of electric charge at the time of contact of two materials and if the amount of a crosslinking agent is small, the pressure-sensitive adhesive (layer) becomes soft and may have a wider contact surface area to the adherend surface with low polarity (rough adherend surface) and therefore, the high potential difference is generated and owing to this, the peeling electrification voltage is increased. In Comparative Example 3 , it was confirmed that since no antistatic component was added, the antistatic property was inferior.

DESCRIPTION OF REFERENCE SIGNS

1: potentiometer
2: pressure-sensitive adhesive sheet
3: polarizing plate
4: acrylic plate
5: sample fixed stand

## Claims

1. A pressure-sensitive adhesive sheet comprising a substrate and a pressure-sensitive adhesive layer on at least one surface of the substrate, wherein
the pressure-sensitive adhesive layer is formed of a water dispersion type acryl-based pressure-sensitive adhesive composition containing an acrylic emulsion-based polymer containing at least 70 to 99.5% by weight of a (meth) acrylic acid alkyl ester (A) and 0.5 to 10% by weight of a carboxyl-containing unsaturated monomer (B) as raw material monomers and an ionic compound;
a peeling power ratio ((B)/(A)) of a peeling power (B) for an adherend surface with a surface roughness Ra of 250 to 450 μm and low polarity to a peeling power (A) for an adherend surface with a surface roughness Ra of 5 to 50 μm and high polarity measured at a peeling speed of 30 m/minute and a peeling angle of 180° is 0.7 to 1.5;
the adhesion to the low polarity adherend surface is 99.0% or higher; and
an initial peeling electrification voltage (absolute value) is 1.0 kV or lower.

2. The pressure-sensitive adhesive sheet according to claim 1, wherein the water dispersion type acryl-based pressure-sensitive adhesive composition contains an ether-containing polysiloxane.

3. The pressure-sensitive adhesive sheet according to claim 1 or 2, wherein the water dispersion type acryl-based pressure-sensitive adhesive composition contains a water-insoluble crosslinking agent having two or more functional groups which can be reacted with a carboxyl group.

4. The pressure-sensitive adhesive sheet according to any one of claims 1 to 3, wherein the ionic compound is an ionic liquid and/or an alkali metal salt.

5. The pressure-sensitive adhesive sheet according to claim 4, wherein the ionic liquid contains at least kind cation selected from the group consisting of cations represented by the following formulas (A) to (E):

[Formula 1]

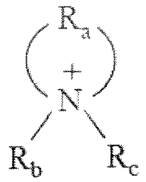
(A)

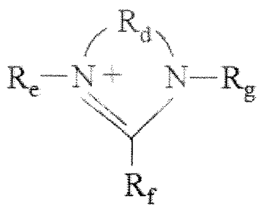
(B)

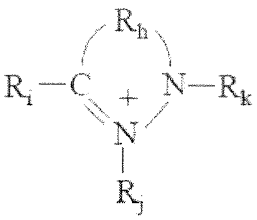
(C)

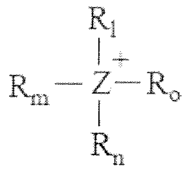
(D)

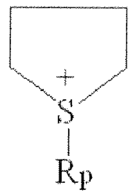
(E)

[in the formula (A), $R_a$ represents a hydrocarbon group with 4 to 20 carbon atoms or is optionally a functional group formed by partially substituting the hydrocarbon group with a heteroatom; and $R_b$ and $R_c$ are the same or different, and each represent hydrogen or a hydrocarbon group with 1 to 16 carbon atoms or are each optionally a functional group formed by partially substituting the hydrocarbon group with a heteroatom; provided that the nitrogen atom contains a double bond, there is no $R_c$];
[in the formula (B), $R_d$ represents a hydrocarbon group with 2 to 20 carbon atoms or is optionally a functional group formed by partially substituting the hydrocarbon group with a heteroatom; and $R_e$, $R_f$, and $R_g$ are the same or different, and each represent hydrogen or a hydrocarbon group with 1 to 16 carbon atoms or are each optionally a functional group formed by partially substituting the hydrocarbon group with a heteroatom];
[in the formula (C), $R_h$ represents a hydrocarbon group with 2 to 20 carbon atoms or is optionally a functional group formed by partially substituting the hydrocarbon group with a heteroatom; and $R_i$, $R_j$, and $R_k$ are the same or different, and each represent hydrogen or a hydrocarbon group with 1 to 16 carbon atoms or are each optionally a functional group formed by partially substituting the hydrocarbon group with a heteroatom];
[in the formula (D), Z represents a nitrogen, sulfur or phosphorus atom; $R_1$, $R_m$, $R_n$, and $R_o$ are the same or different, and each represent a hydrocarbon group with 1 to 20 carbon atoms or are each optionally a functional group formed by partially substituting the hydrocarbon group with a heteroatom; provided that Z is a sulfur atom, there is no $R_o$]; and
[in the formula (E), $R_p$ represents a hydrocarbon group with 1 to 18 carbon atoms or is optionally a functional group formed by partially substituting the hydrocarbon group with a heteroatom].

6. The pressure-sensitive adhesive sheet according to claim 4 or 5, wherein the cation of the ionic liquid is at least one kind cation selected from the group consisting of cations of imidazolium-containing salt type, pyridinium-containing salt type, morpholinium-containing salt type, pyrrolidinium-containing salt type, piperidinium-containing salt type, ammonium-containing salt type, phosphonium-containing salt type, and sulfonium-containing salt type.

7. The pressure-sensitive adhesive sheet according to any one of claims 4 to 6, wherein the ionic liquid contains at least one kind cation selected from the group consisting of cations represented by the following formulas (a) to (d):

[Formula 2]

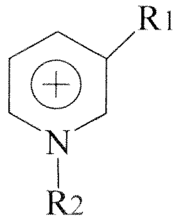

(a)

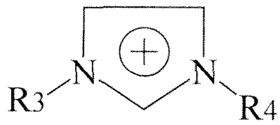

(b)

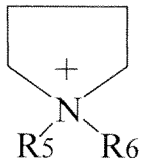

(c)

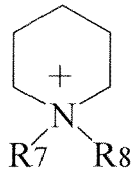

(d)

[in the formula (a), $R_1$ represents hydrogen or a hydrocarbon group with 1 to 3 carbon atoms; and $R_2$ represents hydrogen or a hydrocarbon group with 1 to 7 carbon atoms];
[in the formula (b), $R_3$ represents hydrogen or a hydrocarbon group with 1 to 3 carbon atoms; and $R_4$ represents hydrogen or a hydrocarbon group with 1 to 7 carbon atoms];
[in the formula (c), $R_5$ represents hydrogen or a hydrocarbon group with 1 to 3 carbon atoms; and $R_6$ represents hydrogen or a hydrocarbon group with 1 to 7 carbon atoms]; and
[in the formula (d), $R_7$ represents hydrogen or a hydrocarbon group with 1 to 3 carbon atoms; and $R_8$ represents hydrogen or a hydrocarbon group with 1 to 7 carbon atoms].

**8.** The pressure-sensitive adhesive sheet according to any one of claims 1 to 7, wherein the water dispersion type acryl-based pressure-sensitive adhesive composition contains 0.1 to 3 parts by weight of the ionic liquid per 100 parts by weight of the acrylic emulsion-based polymer (solid matter).

**9.** The pressure-sensitive adhesive sheet according to any one of claims 1 to 8, wherein the water dispersion type acryl-based pressure-sensitive adhesive composition contains 0.1 to 3 parts by weight of the ether-containing polysiloxane per 100 parts by weight of the acrylic emulsion-based polymer (solid matter).

**10.** The pressure-sensitive adhesive sheet according to any one of claims 1 to 9, wherein the acrylic emulsion-based polymer is a polymer obtained by polymerization using a reactive emulsifier containing a radically polymerizable functional group in the molecule.

**11.** The pressure-sensitive adhesive sheet according to any one of claims 1 to 10, wherein the water dispersion type acryl-based pressure-sensitive adhesive composition contains 1.1 to 2.4 parts by weight of the water-insoluble crosslinking agent per 100 parts by weight of the acrylic emulsion-based polymer (solid matter).

**12.** The pressure-sensitive adhesive sheet according to any one of claims 1 to 11, wherein the acrylic emulsion-based polymer is a polymer obtained by polymerization using 0.01 to 1 parts by weight of a polymerization initiator per 100 parts by weight in total of the raw material monomers.

**13.** The pressure-sensitive adhesive sheet according to any one of claims 1 to 12, wherein the acrylic emulsion-based polymer is a polymer obtained by polymerization using a chain transfer agent.

**14.** The pressure-sensitive adhesive sheet according to any one of claims 1 to 13, which has an antistatic layer and/or a stain-resistant layer on at least one surface side of the substrate.

**15.** The pressure-sensitive adhesive sheet according to any one of claims 1 to 14, which is a surface protecting film for an optical component.

Fig. 1

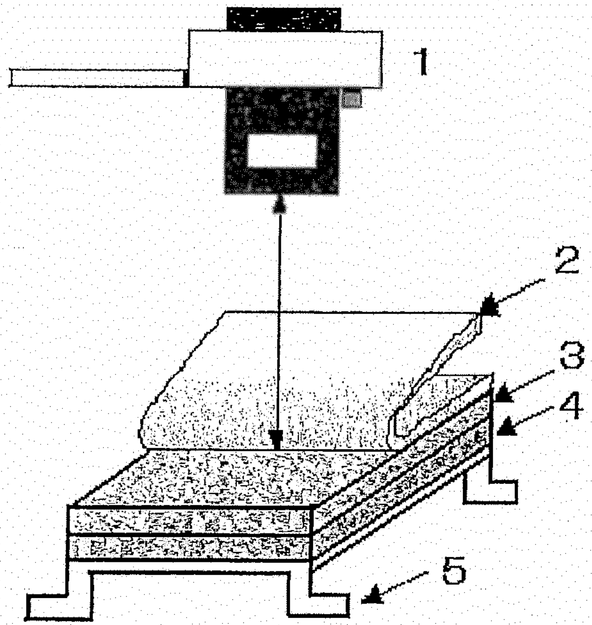

Europäisches Patentamt
European Patent Office
Office européen des brevets

# EUROPEAN SEARCH REPORT

Application Number
EP 13 17 7790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 693 430 A2 (NITTO DENKO CORP [JP]) 23 August 2006 (2006-08-23) * the whole document * ----- | 1-15 | INV. C09J7/02 |
| X | EP 1 939 263 A1 (NITTO DENKO CORP [JP]) 2 July 2008 (2008-07-02) * the whole document * ----- | 1-15 | |
| X | EP 1 602 698 A1 (NITTO DENKO CORP [JP]) 7 December 2005 (2005-12-07) * the whole document * ----- | 1-15 | |
| X | EP 1 582 573 A2 (NITTO DENKO CORP [JP]) 5 October 2005 (2005-10-05) * the whole document * ----- | 1-15 | |

TECHNICAL FIELDS SEARCHED (IPC)

C09J

The present search report has been drawn up for all claims

1

| Place of search | Date of completion of the search | Examiner |
|---|---|---|
| The Hague | 29 November 2013 | Jansen, Reinier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 7790

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2013

| Patent document cited in search report | Publication date | Patent family member(s) | Publication date |
|---|---|---|---|
| EP 1693430 A2 | 23-08-2006 | CN 1824722 A | 30-08-2006 |
| | | EP 1693430 A2 | 23-08-2006 |
| | | JP 2006232882 A | 07-09-2006 |
| | | KR 20060093663 A | 25-08-2006 |
| | | TW 200636035 A | 16-10-2006 |
| | | US 2006188711 A1 | 24-08-2006 |
| EP 1939263 A1 | 02-07-2008 | CN 101243153 A | 13-08-2008 |
| | | EP 1939263 A1 | 02-07-2008 |
| | | JP 2013036046 A | 21-02-2013 |
| | | KR 20080044329 A | 20-05-2008 |
| | | TW 200710197 A | 16-03-2007 |
| | | US 2009163626 A1 | 25-06-2009 |
| | | WO 2007029681 A1 | 15-03-2007 |
| EP 1602698 A1 | 07-12-2005 | CN 1872935 A | 06-12-2006 |
| | | EP 1602698 A1 | 07-12-2005 |
| | | KR 20060046329 A | 17-05-2006 |
| | | TW 200617124 A | 01-06-2006 |
| | | TW 201111461 A | 01-04-2011 |
| | | US 2005266238 A1 | 01-12-2005 |
| EP 1582573 A2 | 05-10-2005 | AT 484559 T | 15-10-2010 |
| | | CN 1667071 A | 14-09-2005 |
| | | CN 102277099 A | 14-12-2011 |
| | | EP 1582573 A2 | 05-10-2005 |
| | | EP 1889889 A2 | 20-02-2008 |
| | | EP 2246404 A1 | 03-11-2010 |
| | | KR 20060043541 A | 15-05-2006 |
| | | KR 20100122885 A | 23-11-2010 |
| | | KR 20100122886 A | 23-11-2010 |
| | | KR 20110036720 A | 08-04-2011 |
| | | KR 20120044315 A | 07-05-2012 |
| | | TW 200600544 A | 01-01-2006 |
| | | US 2005197450 A1 | 08-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11000961 A
- JP 2001064607 A
- JP 2001131512 A
- JP 2003027026 A
- JP 3810490 B
- JP 2007031585 A


### Non-patent literature cited in the description


- Ionic liquids-Front line and future for developments. CMC Co., Ltd,